# EUROPEAN PATENT APPLICATION

(11) **EP 4 807 884 A1**
(43) Date of publication of application: **16.09.2026**
(21) Application number: 25732308.9
(22) Date of filing: 23.01.2025
(51) Int. Cl.: H01M 50/502, H01M 50/509, H01M 50/528

(54) **BATTERY PACK, BATTERY DEVICE, AND ELECTRIC DEVICE**

(71) Applicant: Contemporary Amperex Technology Co., Ltd., Ningde, Fujian 352100 (CN)
(72) Inventor: WANG, Yalei, Ningde, Fujian 352100 (CN); ZHOU, Huiping, Ningde, Fujian 352100 (CN); CHEN, Juntao, Ningde, Fujian 352100 (CN)
(74) Representative: Gong, Jinping
(86) International application number: PCT/CN2025/074370
(87) International publication number: WO 2026/156620

(57) **Abstract**

A battery cell assembly (20), a battery apparatus (100), and an electric apparatus (1000). The battery cell assembly (20) includes: a plurality of pouch battery cells (30) sequentially electrically connected. The pouch battery cell (30) includes a housing (31), an electrode assembly (32), and electrode leads (33). The electrode assembly (32) is disposed within the housing (31), the electrode leads (33) are electrically connected to the electrode assembly (32), and at least a portion of the electrode lead (33) is exposed outside the housing (31). The electrode leads (33) of two adjacent pouch battery cells (30) are directly connected.

## Description

### TECHNICAL FIELD

This application relates to the field of battery technologies, and in particular, to a battery cell assembly, a battery apparatus, and an electric apparatus.

### BACKGROUND

In related technologies, batteries are widely used in various fields, including electric transportation tools such as electric bicycles, electric motorcycles, and electric vehicles as well as military equipment and aerospace. Batteries may be roughly classified into pouch cells and hard-shell batteries based on the hardness of their housing. Pouch cells offer advantages of higher mass/volume energy density and better safety, leading to their increasingly widespread adoption.

When assembling a plurality of pouch battery cells into an assembly, individual pouch battery cells in the battery cell assembly need to be electrically connected to form a battery cell assembly. In the related technologies, a manner of connection between two adjacent pouch battery cells in the battery cell assembly is not conducive to further increasing the energy density of the battery cell assembly. Therefore, how to design a manner of connection between two adjacent pouch battery cells in a battery cell assembly to further increase the energy density of the battery cell assembly remains a technical challenge to be addressed.

### SUMMARY

In view of the foregoing issues in the prior art, this application provides a battery cell assembly, a battery apparatus, and an electric apparatus. A manner of connection between two adjacent pouch battery cells in the battery cell assembly is conducive to further increasing the energy density of the battery cell assembly.

According to a first aspect, this application provides a battery cell assembly, including: a plurality of pouch battery cells sequentially electrically connected, where each of the pouch battery cells includes a housing, an electrode assembly, and electrode leads, the electrode assembly is disposed within the housing, the electrode leads are electrically connected to the electrode assembly, at least a portion of the electrode lead is exposed outside the housing, and the electrode leads of two adjacent pouch battery cells are directly connected.

In the foregoing technical solution, by ensuring that the electrode leads of two adjacent pouch battery cells in the battery cell assembly are directly connected, components for electrical connection between the pouch battery cells can be eliminated or reduced, and the number of parts in the battery cell assembly can be reduced, thereby saving the space occupied by the components for electrical connection. This is conducive to increasing the energy density of the battery cell assembly. In addition, eliminating or reducing the components for electrical connection between the pouch battery cells can also lower the costs.

In some embodiments, the electrode leads of two adjacent pouch battery cells are welded together.

In the foregoing technical solution, with the electrode leads of two adjacent pouch battery cells in the battery cell assembly being welded together, direct connection of terminals of two adjacent pouch battery cells in the battery cell assembly is implemented, making the manner of connecting the electrode leads of two adjacent pouch battery cells in the battery cell assembly simple and reliable.

In some embodiments, the electrode leads of two adjacent pouch battery cells are directly connected through electrically conductive adhesive.

In the foregoing technical solution, with the electrode leads of two adjacent pouch battery cells in the battery cell assembly being connected through electrically conductive adhesive, direct connection of terminals of two adjacent pouch battery cells in the battery cell assembly is implemented, making the manner of connecting the electrode leads of two adjacent pouch battery cells in the battery cell assembly simple and reliable.

In some embodiments, the portion of the electrode lead exposed outside the housing is a lead-out part, and the lead-out part is formed in a sheet-like shape.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. With the lead-out part being designed in a sheet-like shape, the connection area between the two electrode leads can be increased, thereby improving the stability and reliability of the connection between the two electrode leads.

In some embodiments, in width direction of the pouch battery cell, fillets are formed at two ends of the lead-out part in the width direction of the pouch battery cell.

In the foregoing technical solution, by ensuring that fillets are formed at two ends of the lead-out part, the risk of the lead-out part scratching other structures or injuring the human body during the process of connecting the lead-out parts of two electrode leads can be reduced.

In some embodiments, the portion of the electrode lead exposed outside the housing is a lead-out part, and the lead-out part is a flexible structure.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. The lead-out part, being designed as a flexible structure, is deformable. This allows the lead-out part to remain straight or be bent into a predetermined shape as needed, making the connection of the lead-out parts of two electrode leads and the arrangement of a plurality of two pouch battery cells in the battery cell assembly more flexible.

In some embodiments, the portion of the electrode lead exposed outside the housing is a lead-out part, and a thickness of the lead-out part is 0.1 mm to 0.5 mm.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. With the thickness of the lead-out part being set to 0.1 mm to 0.5 mm, the thickness of the lead-out part can effectively meet the requirements for handling high currents, and the structural strength of the lead-out part can also meet demands. Such thickness also provides the lead-out part with good flexibility, reducing the process difficulty of bending and deforming the lead-out part when needed.

In some embodiments, the portion of the electrode lead exposed outside the housing is a lead-out part, and a width dimension of the lead-out part in the width direction of the pouch battery cell is 20 mm to 60 mm.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. With the width dimension of the lead-out part in the width direction of the pouch battery cell being set to 20 mm to 60 mm, the width dimension of the lead-out part can effectively meet the requirements for handling high currents, and the connection area between the two electrode leads can be increased, thereby improving the stability and reliability of the connection between the two electrode leads.

In some embodiments, the portion of the electrode lead exposed outside the housing is a lead-out part, and a length dimension of the lead-out part in the width direction of the pouch battery cell is 10 mm to 50 mm.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. With the length dimension of the lead-out part in the length direction of the pouch battery cell being set to 10 mm to 50 mm, the width dimension of the lead-out part can effectively meet the requirements for handling high currents, and the length dimension can increase the connection area between the two electrode leads, thereby improving the stability and reliability of the connection between the two electrode leads.

In some embodiments, the portion of the electrode lead exposed outside the housing is a lead-out part, and the lead-out part is made of aluminum foil or copper foil.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. Made of aluminum foil or copper foil, the lead-out part provides good conductivity. Such material also provides the lead-out part with good flexibility, reducing the process difficulty of bending and deforming the lead-out part when needed.

In some embodiments, the portion of the electrode lead exposed outside the housing is a lead-out part, the lead-out part includes a connection segment, the connection segments of two directly connected electrode leads are overlapped and connected, and a ratio of a length dimension of the connection segment in length direction of the pouch battery cell to a length dimension of the lead-out part in the length direction of the pouch battery cell is 1/4 to 1/2.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. By ensuring that the ratio of the length dimension of the overlapping portion between two lead-out parts in length direction of the pouch battery cells to the dimension of the lead-out part in the length direction of the pouch battery cells is 1/4 to 1/2, the two electrode leads can have a longer overlapping connection length, improving the stability and reliability of the connection between the two electrode leads. Furthermore, this allows a portion of the lead-out part to remain, separating the overlapping connection portion between the two electrode leads from the housing and facilitating direct connection of the two electrode leads.

In some embodiments, the two electrode leads of the pouch battery cell are located on two opposite sides in the length direction of the pouch battery cell.

In the foregoing technical solution, by ensuring that the two electrode leads of the pouch battery cell are located on opposite sides in the length direction of the pouch battery cell, a plurality of pouch battery cells can be connected to create a long string when the plurality of pouch battery cells are sequentially electrically connected. Fewer restrictions are imposed on the number of pouch battery cells in the battery cell assembly, allowing for both battery cell assemblies with fewer pouch battery cells and battery cell assemblies with more pouch battery cells, offering greater flexibility in the number of pouch battery cells provided in the battery cell assembly.

In some embodiments, the portion of the electrode lead exposed outside the housing is the lead-out part, a middle position of the pouch battery cell in the width direction is a width middle position, and in the width direction of the pouch battery cell, the lead-out part is located on a side of the width middle position, forming a clearance space on a side of the lead-out part close to the width middle position.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. With the lead-out part being arranged on a side of the middle position in the width direction of the pouch battery cell, the clearance space can be formed on a side of the lead-out part close to the width middle position. This avoidance space can provide room for the arrangement of other structures, enhancing the compactness of the overall structure of the battery cell assembly. As a result, it is conducive to increasing the energy density of the battery cell assembly.

In some embodiments, the plurality of pouch battery cells of the battery cell assembly are sequentially connected in series.

In the foregoing technical solution, sequentially connecting the plurality of pouch battery cells in the battery cell assembly in series can make the output voltage of the battery cell assembly relatively high.

In some embodiments, the battery cell assembly further includes a thermal management component, where the thermal management component is disposed on at least one side of the pouch battery cells in the thickness direction, and the thermal management component is thermally connected to the pouch battery cells for heat exchange with the pouch battery cells.

In the foregoing technical solution, the thermal management component is provided and disposed on at least one side of the pouch battery cells in the thickness direction, and heat exchange between the thermal management component and the pouch battery cells can enable temperature regulation of the pouch battery cells, adjusting the temperatures of the pouch battery cells to an appropriate range.

In some embodiments, all the pouch battery cells of the battery cell assembly are arranged in the length direction of the pouch battery cells.

In the foregoing technical solution, arranging all pouch battery cells in the battery cell assembly in the length direction of the pouch battery cells can simplify the arrangement of the plurality of pouch battery cells in the battery cell assembly, making the process of assembling a plurality of pouch battery cells to form a battery cell assembly relatively straightforward.

In some embodiments, all the pouch battery cells of the battery cell assembly are divided into multiple sub-battery cell assemblies, the multiple sub-battery cell assemblies are arranged in the thickness direction of the pouch battery cells, and each of the sub-battery cell assemblies includes one pouch battery cell or multiple pouch battery cells arranged in the length direction of the pouch battery cells.

In the foregoing technical solution, dividing the plurality of pouch battery cells of the battery cell assembly into multiple sub-battery cell assemblies arranged in the thickness direction of the pouch battery cells can make the arrangement of the battery cell assembly compact in overall structure. Furthermore, the manner of arranging the plurality of pouch battery cells in the battery cell assembly can be set as required, also offering more flexibility in the arrangement of the plurality of pouch battery cells in the battery cell assembly.

In some embodiments, the portion of the electrode lead exposed outside the housing is the lead-out part, the lead-out parts of the two directly connected electrode leads in the two adjacent sub-battery cell assemblies are connected and jointly form a connection part, and at least a portion of the connection part is curved.

In the foregoing technical solution, the portion of the electrode lead exposed outside the housing is defined as the lead-out part, and the electrode leads of two adjacent pouch battery cells are directly connected, which in practice means that the lead-out parts of the two electrode leads are directly connected. The connection part is formed jointly by the lead-out parts of the two directly connected electrode leads in the two adjacent battery cell assemblies and is provided in a bent shape, so that the multiple sub-battery cell assemblies in the battery cell assembly can be easily arranged in the thickness direction of pouch battery cells.

In some embodiments, in a direction of connection between the two directly connected electrode leads, the connection part includes multiple straight sections sequentially connected, the two adjacent straight sections are arranged at an angle, and the two adjacent straight sections are connected by an arc section, the arc section extending along an arc, and the straight section extending along a straight line.

In the foregoing technical solution, by providing the connection part formed by the two directly connected lead-out parts in a bent shape and connecting the adjacent straight sections of the connection part by an arc section, structures of the connecting part with sharp corners or edges can be reduced, decreasing the stress concentration at the sharp corners or edges of the connecting part.

In some embodiments, a position of connection between the two directly connected electrode leads is located on the straight section.

In the foregoing technical solution, by ensuring that the position of connection between the two directly connected electrode leads is located on the straight section of the connection part instead of on the arc section, the position of connection between the two directly connected electrode leads can be in a position with less stress, thereby reducing the influence of stress on the connection between the electrode leads and improving the reliability and stability of the connection between the two directly connected electrode leads.

In some embodiments, the battery cell assembly includes a reinforced partition, where the reinforced partition is sandwiched between two adjacent pouch battery cells, and the reinforced partition has a higher hardness than the housing.

In the foregoing technical solution, the reinforced partitions are arranged between adjacent pouch battery cells, with the reinforced partition having a higher hardness than the housing, facilitating the grouping of a plurality of pouch battery cells. This can enhance the overall rigidity of the battery cell assembly formed by grouping a plurality of pouch battery cells, facilitating installation of the battery cell assembly formed by grouping the plurality of pouch battery cells and reducing deformation of the grouped pouch battery cells.

In some embodiments, a thickness of the reinforced partition is 0.8 mm to 2.0 mm.

In the foregoing technical solution, with the thickness of the reinforced partition being set to not less than 0.8 mm, the reinforced partitions can effectively reinforce the battery cell assembly formed by grouping a plurality of pouch battery cells. In addition, with the thickness of the reinforced partition being set to be no more than 2.0 mm, the space occupied by the reinforced partition can be reduced while the reinforced partition plays an effective reinforcing role, enabling the battery cell assembly to have a relatively high energy density. With the thickness of the reinforced partition being set to within the range of 0.8 mm to 2.0 mm, the overall strength and rigidity of the battery cell assembly can be effectively improved, and the overall energy density of the battery cell assembly can be made relatively high.

In some embodiments, the reinforced partition is an aluminum plate, an aluminum alloy plate, a copper plate, or a steel plate.

In the foregoing technical solution, by providing the reinforced partition made of a material such as aluminum plate, aluminum alloy plate, copper plate, or steel plate, the reinforced partition can have relatively high strength and hardness, thereby better improving the overall rigidity of the plurality of grouped pouch battery cells and more effectively reducing the deformation of the pouch battery cells in the battery cell assembly.

In some embodiments, the reinforced partition is a solid structure.

In the foregoing technical solution, by providing the reinforced partition as a solid structure, the reinforced partition can have good structural strength and rigidity and play an effective reinforcing role even when its thickness is relatively small. This is conducive to enabling the battery cell assembly as a whole to have good strength and rigidity while also allowing the battery cell assembly as a whole to have a relatively high volumetric energy density.

In some embodiments, a cavity is formed inside the reinforced partition.

In the foregoing technical solution, with the cavity being provided inside the reinforced partition, the reinforced partition enhances the overall rigidity of the grouped pouch battery cells, and the cavity inside the reinforced partition can play the role of absorbing the swelling and deformation of the pouch battery cells. The cavity inside the reinforced partition can provide buffering for the deformation of adjacent pouch battery cells, and it is conducive to reducing the weight of the reinforced partition.

In some embodiments, the cavity includes a heat exchange channel for the flow of heat exchange medium.

In the foregoing technical solution, at least a portion of the cavity inside the reinforced partition is made to form a heat exchange channel. When the heat exchange medium flows through the heat exchange channel inside the reinforced partition, the heat exchange medium can exchange heat with the pouch battery cells, implementing effective temperature regulation of the pouch battery cells.

In some embodiments, the pouch battery cell is any one of a lithium iron phosphate battery cell, a ternary lithium battery cell, and a solid-state battery cell.

In the foregoing technical solution, in an embodiment where the pouch battery cell is a lithium iron phosphate battery cell, the safety of the pouch battery cell can be improved, and the cycle life of the pouch battery cell can be extended; in an embodiment where the pouch battery cell is a ternary lithium battery cell, the energy density of the pouch battery cell can be increased, extending the driving range; and in an embodiment where the pouch battery cell is a solid-state battery cell, not only can the energy density be increased, but also the safety can be enhanced.

In some embodiments, when the pouch battery cell is a lithium iron phosphate battery cell, a weight ratio of a positive electrode active material, a positive electrode binder, and a positive electrode conductive agent in a positive electrode material of the pouch battery cell is 96:(1 to 3):(1 to 3); and when the pouch battery cell is a ternary lithium battery cell, a weight ratio of a positive electrode active material, a positive electrode binder, and a positive electrode conductive agent in a positive electrode material of the pouch battery cell is 96:(2 to 3):(1 to 2).

In the foregoing technical solution, in an embodiment where the pouch battery cell is a lithium iron phosphate battery cell, the use of the positive electrode active material, positive electrode binder, and positive electrode conductive agent in the positive electrode material in the foregoing ratio can improve the electrochemical performance and mechanical stability of the pouch battery cell; and in an embodiment where the pouch battery cell is a ternary lithium battery cell, the use of the positive electrode active material, positive electrode binder, and positive electrode conductive agent in the positive electrode material in the foregoing ratio can increase the energy density and cycle life of the battery.

According to a second aspect, this application provides a battery apparatus, including: a box; and a battery cell assembly disposed inside the box, where the battery cell assembly is the battery cell assembly according to the first aspect of this application.

In the foregoing technical solution, the battery apparatus includes the foregoing battery cell assembly. This can eliminate or reduce components for electrical connection between pouch battery cells and reduce the number of parts in the battery cell assembly, thereby saving the space occupied by the components for electrical connection, which is conducive to increasing the energy density of the battery cell assembly and increasing the density of the battery apparatus. In addition, eliminating or reducing the components for electrical connection between the pouch battery cells can also lower the costs.

In some embodiments, a plurality of battery cell assemblies are provided.

In the foregoing technical solution, the battery apparatus including the plurality of battery cell assemblies can enable the battery apparatus to have a higher electrical capacity and have a higher overall energy density.

In some embodiments, at least some of the battery cell assemblies are arranged in a first direction, and thickness direction of the pouch battery cells is all aligned with the first direction.

In the foregoing technical solution, at least some of the plurality of battery cell assemblies are arranged in the thickness direction of the pouch battery cells, which can make the arrangement of the plurality of battery cell assemblies inside the battery apparatus more compact, helping increase the energy density of the battery apparatus.

In some embodiments, the plurality of battery cell assemblies are connected in series and/or in parallel.

In the foregoing technical solution, by connecting the plurality of battery cell assemblies in series, the battery apparatus can have a relatively high output voltage; by connecting the plurality of battery cell assemblies in parallel, the battery apparatus can have a relatively high output current; or by ensuring that the plurality of battery cell assemblies are in hybrid series and parallel connection, the battery apparatus can have both a relatively high output voltage and a relatively high output current.

In some embodiments, the thickness direction of the pouch battery cells is all aligned with the first direction, length direction of the pouch battery cells is all aligned with a second direction, width direction of the pouch battery cells is all aligned with a third direction, the first direction, the second direction, and the third direction intersect with each other, and a bottom plate and a top cover of the box are respectively located on two opposite sides of the battery cell assembly in the second direction.

In the foregoing technical solution, the thickness direction of the plurality of pouch battery cells is all aligned with the first direction, the length direction of the plurality of pouch battery cells is all aligned with a second direction, the width direction of the plurality of pouch battery cells is all aligned with a third direction, and a bottom plate and a top cover of the box are respectively arranged on two sides of the battery cell assembly in the second direction. This enables a compact and simplified arrangement of the plurality of pouch battery cells within the battery apparatus, facilitating the subsequent assembly of the plurality of grouped pouch battery cells into the box.

In some embodiments, the box has an accommodating cavity for accommodating the battery cell assembly, a constraint piece extending in the first direction is provided in the box, and two ends of the constraint piece in length direction are respectively connected to two side walls of the accommodating cavity in the first direction.

In the foregoing technical solution, the constraint piece extending in the thickness direction of the pouch battery cells is provided inside the box, and the two ends of the constraint piece in the length direction are respectively connected and fixed to the box, so that the constraint piece tightens against the two side walls of the accommodating cavity in the first direction. In this way, the constraint piece can constrain and suppress the swelling and deformation of the pouch battery cells in their thickness direction.

In some embodiments, the two ends of the constraint piece are connected and fixed to the box by fasteners.

In the foregoing technical solution, by ensuring that the two ends of the constraint piece are fixed to the box with fasteners, the two ends of the constraint piece can be more securely locked to the box, and the constraint piece can better constrain and suppress the swelling and deformation of the pouch battery cells in their thickness direction.

In some embodiments, the constraint piece includes a constraint belt and an insulating layer, the constraint belt being a metal piece, and the insulating layer covering an outer surface of the constraint belt.

In the foregoing technical solution, by providing the constraint piece including a constraint belt and an insulating layer, with the constraint belt being a metal piece, the constraint piece can have good structural strength, so that the constraint piece can better constrain and suppress the swelling and deformation of the pouch battery cells in their thickness direction. Furthermore, by ensuring that the exterior of the constraint piece is covered with an insulating layer, problems such as short circuits between the constraint piece and the pouch battery cells or other components due to electrical contact can be prevented, while the constraint piece uses the constraint belt made of a metal material for better constraint and suppression of the swelling and deformation of the pouch battery cells in their thickness direction.

In some embodiments, in the first direction, a reinforced partition is sandwiched between at least some of two adjacent pouch battery cells, the reinforced partition is connected to the housing, and the reinforced partition has a higher hardness than the housing.

In the foregoing technical solution, by providing a reinforced partition between at least some of two adjacent pouch battery cells and with a hardness higher than that of the housing, a plurality of pouch battery cells can be conveniently grouped, increasing the overall rigidity of the plurality of grouped pouch battery cells, facilitating subsequent installation of the plurality of grouped pouch battery cells, and mitigating the deformation of the pouch battery cells after grouped.

In some embodiments, a thickness of the reinforced partition is less than that of the pouch battery cell.

In the foregoing technical solution, by ensuring the thickness of the reinforced partition is less than that of the pouch battery cell, the occupied space of the reinforced partition can be reduced while the overall rigidity of grouped pouch battery cells is enhanced, especially in the thickness direction of the pouch battery cell, resulting in a higher overall energy density of the battery apparatus.

In some embodiments, the reinforced partition is a metal plate.

In the foregoing technical solution, by providing the reinforced partition as a metal plate, the reinforced partition can have higher strength and hardness, thereby better improving the overall rigidity of the grouped pouch battery cells and reducing the deformation of the pouch battery cells in the battery cell assembly.

In some embodiments, the reinforced partition is a thermally conductive piece and is thermally connected to the housing.

In the above technical solution, by providing the reinforced partition as a thermally conductive piece and thermally connecting it to the housing, the reinforced partition not only enhances the overall rigidity of the grouped pouch battery cells, but also provides a thermal management function. Heat exchange between the reinforced partition and the pouch battery cells can adjust the temperature of the pouch battery cells so that the pouch battery cells operate in a suitable temperature range.

In some embodiments, the reinforced partition is a solid structure.

In the foregoing technical solution, by providing the reinforced partition as a solid structure, the reinforced partition can have good structural strength and rigidity and play an effective reinforcing role even when its thickness is relatively small. This is conducive to enabling the battery cell assembly as a whole to have good strength and rigidity while also allowing the battery cell assembly as a whole to have a relatively high volumetric energy density.

In some embodiments, a cavity is formed inside the reinforced partition.

In the foregoing technical solution, with the cavity being provided inside the reinforced partition, the reinforced partition enhances the overall rigidity of the grouped pouch battery cells, and the cavity inside the reinforced partition can play the role of absorbing the swelling and deformation of the pouch battery cells. The cavity inside the reinforced partition can provide buffering for the deformation of adjacent pouch battery cells, and it is conducive to reducing the weight of the reinforced partition.

In some embodiments, the cavity includes a heat exchange channel for the flow of heat exchange medium.

In the foregoing technical solution, at least a portion of the cavity inside the reinforced partition is made to form a heat exchange channel. When the heat exchange medium flows through the heat exchange channel inside the reinforced partition, the heat exchange medium can exchange heat with the pouch battery cells, implementing effective temperature regulation of the pouch battery cells.

In some embodiments, a buffer layer is sandwiched between at least some of two adjacent pouch battery cells, and the buffer layer has a lower hardness than the housing.

In the foregoing technical solution, by providing a buffer layer between at least some of two adjacent pouch battery cells and ensuring the buffer layer has a lower hardness than the housing, the buffer layer can absorb swelling deformation of the pouch battery cells, providing buffering for the deformation of adjacent pouch battery cells.

In some embodiments, the buffer layer is a foam layer or a silicone layer.

In the foregoing technical solution, by providing a reinforced partition between at least some of adjacent pouch battery cells to enhance the rigidity of the battery cell assembly and providing the buffer layer as a foam or silicone layer, the buffer layer can have good flexibility and elastic deformation ability, effectively absorbing swelling and deformation of pouch battery cells. Furthermore, the foam or silicone layers have a lighter mass, contributing to reduced overall weight of the battery apparatus.

In some embodiments, the buffer layer and the reinforced partition are alternately arranged in the first direction.

In the foregoing technical solution, by alternately arranging the buffer layers and reinforced partitions between pouch battery cells in the arrangement direction of the pouch battery cells, the swelling and deformation of the plurality of pouch battery cells in the thickness direction can receive good buffering and absorption while the plurality of pouch battery cells can be uniformly reinforced.

In some embodiments, the electrode leads are located on two opposite sides of the pouch battery cell in the second direction, the second direction intersects with the first direction, and in the second direction and in a direction close to a side wall of the box, an end part of the reinforced partition protrudes out of the housing of the pouch battery cell to form a fixed end, and the fixed end is connected to the box.

In the foregoing technical solution, by ensuring that the end part of the reinforced partition protrudes in the second direction out of the housing of the pouch battery cell and is connected to the box, this enables reliable connection and fixation between the battery cell assembly and the side wall of the box since the reinforced partitions are sandwiched between a plurality of pouch battery cells, and together with the plurality of pouch battery cells, they form a battery cell assembly. The overall hardness of the reinforced partition exceeds that of the housing of the pouch battery cell, so that the connection between the battery cell assembly and the box becomes more reliable, thus improving the installation reliability and stability of the battery cell assembly in the box.

In some embodiments, the fixed end and the electrode lead located on a same side in the second direction are arranged in the third direction, and the first direction, the second direction, and the third direction intersect with each other.

In the foregoing technical solution, the fixed end of the reinforced partition and the electrode lead on the same side in the second direction are arranged in the third direction, so that the space inside the box in the third direction can be well utilized to arrange the fixed end of the reinforced partition and the electrode lead. This effectively prevents contact or interference between the fixed end of the reinforced partition and the electrode lead located on the same side in the second direction due to their close proximity and allows for full utilization of the space inside the box, resulting in a compact internal structure of the battery apparatus and contributing to increased energy density of the battery apparatus.

In some embodiments, a mounting bracket is provided in the box, the mounting bracket is located on at least one side of the battery cell assembly in the second direction and connected to the box, and the fixed end is connected to the mounting bracket.

In the foregoing technical solution, by providing a mounting bracket inside the box and connecting the reinforced partition of the battery cell assembly to the box through the mounting bracket, the stability and reliability of the connection between the reinforced partition and the box can be further enhanced, resulting in a higher overall rigidity and strength of the battery apparatus.

In some embodiments, a height dimension of the mounting bracket in the third direction is less than a width dimension of the pouch battery cell in the third direction, forming an arrangement space to a side of the mounting bracket in the third direction, and the first direction, the second direction, and the third direction intersect with each other.

In the foregoing technical solution, by ensuring that the height dimension of the mounting bracket in the third direction is less than the width dimension of the pouch battery cell in the third direction, an arrangement space can be formed to the side of the mounting bracket in the third direction, where this arrangement space can be utilized for the routing and other structures of the battery cell assembly, simplifying the layout of the routing structure of the battery cell assembly. This allows for full utilization of the space inside the box in the third direction, resulting in a compact internal structure of the battery apparatus and contributing to increased energy density of the battery apparatus.

In some embodiments, at least some of the pouch battery cells are arranged in the thickness direction of the pouch battery cells, adhesive damper strips are provided in the box, an outer surface of the housing includes a housing bottom surface and housing side surfaces, the housing bottom surface is located on lower side of the housing, the housing side surfaces are located on two sides of the pouch battery cell in the thickness direction, a fillet section is formed at the junction of the housing bottom surface and the housing side surface, the box includes a bottom plate, the housing bottom surface is connected to the bottom plate via an adhesive layer, the adhesive damper strip is located on the outer peripheral side of the housing bottom surface, and at least a portion of the adhesive damper strip is located between the fillet section and the bottom plate.

In the foregoing technical solution, by providing the adhesive damper strip at a bevel part at the bottom of the pouch battery cell and positioning the adhesive damper strip between the fillet section and the bottom plate, in fixing and connecting the housing bottom surface of the pouch battery cell to the bottom plate of the box using an adhesive layer, the provided adhesive damper strip can prevent structural adhesive forming the adhesive layer from overflowing into the gap between adjacent pouch battery cells, reducing the likelihood that a hard structure is formed in the gap between adjacent pouch battery cells due to adhesive overflow. In this way, the problem of localized stress concentration between adjacent pouch battery cells can be alleviated, reducing the risk of damage to the pouch battery cells.

In some embodiments, in the thickness direction of the pouch battery cells, two adjacent pouch battery cells share one adhesive damper strip.

In the foregoing technical solution, by having two adjacent pouch battery cells share a single adhesive damper strip, the two pouch battery cells can use the shared adhesive damper strip to prevent the structural adhesive forming the adhesive layer from overflowing into the gap between adjacent pouch battery cells. This can reduce the number of adhesive damper strips to be set, thereby reducing the number of adhesive damper strips that need to be assembled, contributing to the reduction of the time required for assembling the battery apparatus.

In some embodiments, the adhesive damper strip is adhesive damper foam, and the adhesive damper strip is bonded to the bottom plate; or the adhesive damper strip is a single-sided adhesive strip, and the adhesive damper strip is bonded to the fillet section.

In the foregoing technical solution, the adhesive damper foam is used as the adhesive damper strip, and the adhesive damper foam has good compressibility. When the pouch battery cell compresses the adhesive damper strip, the housing bottom surface of the pouch battery cell can be better separated from the gap between the two adjacent pouch battery cells by the adhesive damper strip, thereby more effectively preventing the adhesive layer on the bottom surface of the pouch battery cell from overflowing into the gap between the two adjacent pouch battery cells. Furthermore, bonding the adhesive damper strip to the bottom plate facilitates the installation and fixation of the adhesive damper strip. Alternatively, by using a single-sided adhesive strip as the adhesive damper strip, the adhesive damper strip can be bonded to the fillet section, making it easier to fix the adhesive damper strip to the fillet section of the pouch battery cell. This allows the adhesive damper strip and the pouch battery cell to form an integrated unit, facilitating the subsequent fixation of the pouch battery cell to the bottom plate of the box via the adhesive layer.

According to a third aspect, this application provides an electric apparatus including the battery apparatus according to the second aspect.

In the foregoing technical solution, the electric apparatus includes the foregoing battery apparatus. The battery apparatus has high energy density, which is conducive to enhancing the overall performance of the electric apparatus.

Additional aspects and advantages of this application will be partially given in the following description, and some of which will become apparent in the following description or may be learned from the practice of this application.

### BRIEF DESCRIPTION OF DRAWINGS

The above and/or additional aspects and advantages of this application will become obvious and easy to understand from the description of some embodiments with reference to the following accompanying drawings.
FIG. 1 is a schematic diagram of a battery cell assembly according to some embodiments of this application;
FIG. 2 is a front view of the battery cell assembly in FIG. 1;
FIG. 3 is an enlarged view of A in FIG. 2;
FIG. 4 is a schematic diagram of a pouch battery cell in a battery cell assembly according to some embodiments of this application;
FIG. 5 is a schematic diagram of a battery cell assembly according to some embodiments of this application;
FIG. 6 is an enlarged view of B in FIG. 5;
FIG. 7 is a schematic diagram of a battery cell assembly according to some embodiments of this application;
FIG. 8 is an enlarged view of C in FIG. 7;
FIG. 9 is a cross-sectional schematic diagram of a reinforced partition in a battery cell assembly according to some embodiments of this application;
FIG. 10 is a schematic diagram of a battery apparatus according to some embodiments of this application;
FIG. 11 is a front view of the battery apparatus in FIG. 10;
FIG. 12 is a sectional view along line D-D in FIG. 11;
FIG. 13 is a schematic diagram of an internal structure of the battery apparatus in FIG. 10, with the top cover removed;
FIG. 14 is a schematic diagram of an arrangement of battery cell assemblies inside a battery apparatus according to some embodiments of this application;
FIG. 15 is an enlarged view of E in FIG. 14;
FIG. 16 is a schematic diagram showing fitting between battery cell assemblies and a mounting bracket inside a battery apparatus according to some embodiments of this application;
FIG. 17 is an enlarged view of F in FIG. 16;
FIG. 18 is a schematic diagram showing the fixation of a plurality of pouch battery cells to a bottom plate of a box inside a battery apparatus according to some embodiments of this application; and
FIG. 19 is a schematic diagram of an electric apparatus according to some embodiments of this application.

Reference signs:
1000. electric apparatus;
100. battery apparatus;
10. box; 11. top cover; 12. bottom plate; 13. accommodating cavity; 14. constraint piece; 141. fastener; 15. mounting bracket; 151. sub-mounting bracket; 16. arrangement space;
20. battery cell assembly; 21. sub-battery cell assembly; 22. connection part; 221. straight section; 222. arc section;
30. pouch battery cell; 31. housing; 311. housing bottom surface; 312. housing side surface; 313. fillet section; 32. electrode assembly; 33. electrode lead; 331. lead-out part; 332. fillet; 333. connection segment; 34. clearance space; 35. adhesive damper strip; 36. adhesive layer;
40. reinforced partition; 41. fixed end; 42. cavity; 43. heat exchange channel; 50. buffer layer; and
200. vehicle body.

### DETAILED DESCRIPTION

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skills in the art based on the embodiments of this application without creative efforts shall fall within the protection scope of this application.

Unless otherwise defined, all technical and scientific terms used in this application shall have the same meanings as commonly understood by those skilled in the art to which this application belongs. The terms used in the specification of this application are merely intended to describe the specific embodiments but not intended to constitute any limitation on this application. The terms "include", "comprise", and any variations thereof in the specification and claims of this application and the foregoing description of the drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means two and more than two (inclusive).

In the embodiments of this application, unless otherwise specified, all the embodiments and optional embodiments of this application can be combined with each other to form new technical solutions.

In the embodiments of this application, unless otherwise specified, all the technical features and optional technical features of this application can be combined with each other to form new technical solutions.

In the embodiments of this application, a battery apparatus (Battery Apparatus) may include one or more battery cell assemblies used for providing voltage and capacity. The battery cell assembly (Battery Cell Assembly) may include a plurality of pouch battery cells. The battery apparatus may be a battery pack (battery Pack). The battery pack includes a box and one or more battery cell assemblies, with the battery cell assemblies accommodated in the box.

In the embodiments of this application, the box may include a first box and a second box. The first box and the second box snap together to form an enclosed space inside the box for accommodating the battery cell assemblies. Here, "enclosed" means covered or closed, which may be either sealed or non-sealed. The first box may be a top cover or a bottom plate. For example, the box may include a top cover, a frame, and a bottom plate. The top cover and the bottom plate are respectively connected to the frame, forming an enclosed space inside the box for accommodating the battery cell assemblies.

In an embodiment of this application, the box may be used as a portion of the chassis structure of a vehicle. For example, a portion of the box may become at least a portion of the chassis of the vehicle, or a portion of the box may become at least a portion of the cross beam and longitudinal beam of the vehicle.

In the embodiments of this application, the pouch battery cell may be a secondary battery, and the secondary battery refers to a pouch battery cell that is reusable after an active material in the battery cell is activated by charging the battery cell that has been discharged. The pouch battery cell may be a lithium-ion battery, sodium-ion battery, sodium-lithium-ion battery, lithium metal battery, sodium metal battery, lithium-sulfur battery, magnesium-ion battery, nickel-metal hydride battery, nickel-cadmium battery, and lead-acid battery. This is not limited in the embodiments of this application. The pouch battery cell may be flat, cuboid, or of other shapes. This is not limited in the embodiments of this application either. As the smallest energy unit of the battery apparatus, the pouch battery cell includes a housing and an electrode assembly disposed inside the housing.

The electrode assembly is a component in the pouch battery cell where electrochemical reactions occur. There may be one or more electrode assemblies inside the housing. The electrode assembly is mainly formed by winding or stacking a positive electrode plate and a negative electrode plate, and a separator is generally disposed between the positive electrode plate and the negative electrode plate. Portions of the positive electrode plate and the negative electrode plate with active substances constitute a body part of the electrode assembly, while portions of the positive electrode plate and the negative electrode plate without active substances each constitute a tab. A positive electrode tab and a negative electrode tab may be located at two ends of the body part respectively.

The positive electrode plate may include a positive electrode current collector and a positive electrode film layer provided on at least one surface of the positive electrode current collector, and the positive electrode film layer includes a positive electrode active material.

For example, the positive electrode current collector has two opposite surfaces in its thickness direction, and the positive electrode film layer is provided on either or both of the two opposite surfaces of the positive electrode current collector.

In an example, the positive electrode current collector may be a metal foil current collector or a composite current collector. For example, as the metal foil, stainless steel, copper, aluminum, nickel, carbon electrode, carbon, nickel, titanium, aluminum or stainless steel treated with silver, or the like can be used. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: phosphate, layered transition metal oxide and respective modified compounds thereof. Alternatively, the positive electrode active material may include layered transition metal oxides and respective modified compounds thereof, which is conducive to increasing the energy density of the pouch battery cell. However, this application is not limited to such materials, and may alternatively use other conventional materials that can be used as positive electrode film layers for batteries instead. One of these positive electrode active materials may be used alone, or two or more of them may be used in combination.

Examples of the phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, or a composite material of lithium manganese iron phosphate and carbon.

The layered transition metal oxide includes at least one of a compound with a general formula LiₐNi_{b}Co_{c}M_{d}OₑA_{f} and modified compounds thereof, where 0.8 ≤ a ≤ 1.2, 0.3 ≤ b < 1, 0 < c < 1, 0 < d < 1, 1 ≤ e ≤ 2, 0 ≤ f ≤ 1, M includes at least one of Mn, Al, Zr, Zn, Cu, Cr, Mg, Fe, V, Ti, or B, and A includes at least one of N, F, S, or Cl. Optionally, 0.5 ≤ b < 1, and further optionally, 0.75 ≤ b ≤ 0.98.

Examples of layered transition metal oxides may include but are not limited to at least one of lithium cobalt oxides (for example, LiCoO₂), lithium nickel oxides (for example, LiNiO₂), lithium manganese oxides (for example, LiMnO₂, LiMn₂O₄), lithium nickel cobalt oxides, lithium manganese-manganese oxides, lithium nickel cobalt manganese oxides (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short), and LiNi_{0.9}Co_{0.05}Mn_{0.05}O₂ (Ni90 for short)), lithium-nickel-cobalt-aluminum oxides (for example, LiNi_{0.8}Co_{0.15}Al_{0.05}O₂), and modified compounds thereof.

In the embodiments of this application, the modified compounds of the foregoing positive electrode active materials may be obtained by doping modification and/or surface coating modification to the positive electrode active material, such as carbon coating modification and fast ion conductor coating modification.

In the examples of positive electrode active materials in the embodiments of this application, the molar concentration of oxygen is only a theoretical state value, and lattice oxygen release causes changes in the molar concentration of oxygen. In reality, the molar concentration of oxygen fluctuates.

In the embodiments of this application, the percentage of an element in the positive electrode active material has a meaning well known in the art and can be measured using a device and method well known in the art. For example, with reference to EPA 6010D-2014, the percentage of an element can be tested by inductively coupled plasma atomic emission spectroscopy and measured using a plasma atomic emission spectrometer (ICP-OES, instrument model: Thermo ICAP7400). First, 0.4 g of the positive electrode active material is weighted, and 10 ml of aqua regia (50% concentration) is added thereto to form a mixture. Then the mixture is placed on a 180°C hot plate for 30 minutes. After digestion on a plate, the mixture is diluted to a volume of 100 mL, and a standard curve method is used for quantitative testing.

In some embodiments, the positive electrode can use metal foam. The metal foam may be nickel foam, copper foam, aluminum foam, alloy foam, carbon foam, or the like. When metal foam is used as the positive electrode, the positive electrode film layer may be not provided on the surface of the metal foam, and of course, the positive electrode film layer may alternatively be provided. In an example, the metal foam may alternatively be filled and/or deposited with a lithium source material, potassium metal, or sodium metal, where the lithium source material may be a lithium metal and/or a lithium-rich material.

In some embodiments, the positive electrode film layer further optionally includes a positive electrode conductive agent. The positive electrode conductive agent is not particularly limited in type in the embodiments of this application. In an example, the positive electrode conductive agent includes at least one of superconducting carbon, conductive graphite, acetylene black, carbon black, Ketjen black, carbon dots, carbon nanotubes, graphene, or carbon nanofibers. In some embodiments, a mass percentage of the positive electrode conductive agent in the positive electrode film layer is ≤ 5 wt%.

In some embodiments, the positive electrode film layer further optionally includes a positive electrode binder. The positive electrode binder is not particularly limited in type in the embodiments of this application. In an example, the positive electrode binder may include at least one of polyvinylidene fluoride (PVDF), polytetrafluoroethylene (PTFE), vinylidene fluoride-tetrafluoroethylene-propylene terpolymers, vinylidene fluoride-hexafluoropropylene-tetrafluoroethylene terpolymers, tetrafluoroethylene-hexafluoropropylene copolymers, or fluorine-containing acrylic resins. In some embodiments, a mass percentage of the positive electrode binder in the positive electrode film layer is ≤ 5 wt%.

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

In some embodiments, the negative electrode may be a negative electrode plate. The negative electrode plate may include a negative electrode current collector and a negative electrode film layer disposed on at least one surface of the negative electrode current collector. The negative electrode film layer includes a negative electrode active material.

In an example, the negative electrode current collector includes two opposite surfaces in its thickness direction, and the negative electrode film layer is disposed on either or both of the two opposite surfaces of the negative electrode current collector.

In an example, the negative electrode current collector may be a metal foil, metal foam, or composite current collector. For example, as the metal foil, the negative electrode current collector may use silver surface-treated aluminum or stainless steel, stainless steel, copper, aluminum, nickel, baked carbon, carbon, nickel, or titanium. The metal foam may be nickel foam, copper foam, aluminum foam, alloy foam, carbon foam, or the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode active material may be a negative electrode active material well-known in the art and used for pouch battery cells. In an example, the negative electrode active material may include at least one of the following materials: a carbon material (for example, the carbon material includes at least one of artificial graphite, natural graphite, soft carbon, hard carbon), a silicon-based material, a tin-based material, lithium titanate, or the like. The silicon-based material may be at least one of elemental silicon, silicon-oxygen compounds, silicon-carbon composites, silicon-nitrogen composites, or silicon alloys. The tin-based materials may include at least one of elemental tin, tin-oxygen compounds, or tin alloys. However, this application is not limited to such materials, and may alternatively use other conventional materials that can be used for the negative electrode film layer of the battery. One of these negative electrode film layers may be used alone, or two or more of them may be used in combination.

In some embodiments, the negative electrode active material includes element silicon. Element silicon may be present in the form of a silicon-based material. For example, the silicon-based material may include at least one of elemental silicon, silicon-oxygen compounds, silicon-carbon composites, silicon-nitrogen composites, or silicon alloys. The introduction of element silicon can increase the energy density of the pouch battery cell.

In some embodiments, a mass percentage of element silicon in the negative electrode film layer is 1 wt% to 32 wt%, optionally 2 wt% to 19 wt%, and further optionally 6 wt% to 13 wt%. With the mass percentage of element silicon falling within the foregoing range, the energy density of the pouch battery cell can be increased.

In the embodiments of this application, the mass percentage of element silicon in the negative electrode film layer has a meaning well known in the art, and can be measured using a device and method well known in the art. For example, the negative electrode plate is placed in a solvent such as water to soak, to separate the negative electrode active material from the negative electrode current collector, and the negative electrode active material is obtained by filtration. The percentage of element silicon can be obtained by analyzing the negative electrode active material using the ICAP7400 inductively coupled plasma emission spectrometer from Thermo Fisher Scientific, USA, with reference to the standard GB/T30902-2014.

In some embodiments, the negative electrode film layer further optionally includes a negative electrode conductive agent. The negative electrode conductive agent is not particularly limited in type in the embodiments of this application. In an example, the negative electrode conductive agent may include at least one of superconducting carbon, conductive graphite, acetylene black, carbon black, Ketjen black, carbon dots, carbon nanotubes, graphene, or carbon nanofibers. In some embodiments, a mass percentage of the negative electrode conductive agent in the negative electrode film layer is ≤ 5 wt%.

In some embodiments, the negative electrode film layer further optionally includes a negative electrode binder. The negative electrode binder is not particularly limited in type in the embodiments of this application. In an example, the negative electrode binder may include at least one of styrene-butadiene rubber (SBR), water-soluble unsaturated resin SR-1B, waterborne acrylic resin (for example, polyacrylic acid PAA, polymethylacrylic acid PMAA, and polyacrylic acid sodium PAAS), polyacrylamide (PAM), polyvinyl alcohol (PVA), sodium alginate (SA), or carboxymethyl chitosan (CMCS). In some embodiments, a mass percentage of the negative electrode binder in the negative electrode film layer is ≤ 5%.

In some embodiments, the negative electrode film layer further optionally includes another adjuvant. In an example, the another adjuvant may include a thickener, for example, sodium carboxymethyl cellulose (CMC-Na) or PTC thermistor material. In some embodiments, a mass percentage of the another adjuvant in the negative electrode film layer is ≤ 2 wt%.

In some embodiments, the positive electrode current collector may be made of material aluminum, and the negative electrode current collector may be made of material copper.

In some embodiments, the separator includes a separation film. The separation film is not particularly limited in type in this application, and may be any well-known porous separation film with good chemical stability and mechanical stability.

The separation film is not particularly limited in type in the embodiments of this application, and may be any well-known porous separation film with good chemical stability and mechanical stability.

In some embodiments, the material of the separation film may include one or more of glass fiber, non-woven fabric, polyethylene, polypropylene, and polyvinylidene fluoride. The separation film may be a single-layer film or a multi-layer composite film, which is not particularly limited. When the separation film is a multi-layer composite film, all layers may be made of the same or different materials, which is not particularly limited.

In some embodiments, the separation film may include a porous base film and a coating disposed on at least one side of the porous base film. The coating may include at least one of inorganic particles or organic particles.

The porous base film may include one or more of polyethylene and polypropylene.

Inorganic particles have good heat resistance and can improve the overall heat resistance of the separation film. In the operating voltage range of sodium-ion batteries, inorganic particles basically do not undergo oxidation and reduction reactions with metal dendrites. In other words, inorganic particles are configured not to undergo oxidation and reduction reactions with alkali metals and/or alkaline earth metals at the nominal voltage of a sodium-ion battery.

In some embodiments, the inorganic particles include one or more of boehmite γ-AlOOH, alumina Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, zirconium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyester (such as polyethylene terephthalate, polyethylene naphthalate, polybutylene terephthalate), polyphenylene sulfide, polyamide, polyamide-imide, polyimide, copolymers of butyl acrylate and ethyl methacrylate, or mixtures thereof.

In some embodiments, an electrolyte in the battery cell includes an electrolytic salt and a solvent. The electrolytic salt and solvent are not specifically limited in type and may be selected according to actual needs.

In some embodiments, the electrolyte further optionally includes an additive. For example, the additive may include a negative electrode film-forming additive, or may include a positive electrode film-forming additive, or may include an additive that can improve some performance of the battery, for example, an additive for improving over-charge performance of the battery, an additive for improving high-temperature performance of the battery, and an additive for improving low-temperature performance of the battery.

For example, the additives include at least one of unsaturated bond-containing cyclic carbonate compounds, sulfate compounds, sulfite compounds, sultone compounds, disulfonic acid compounds, nitrile compounds, aromatic compounds, isocyanate compounds, phosphazene compounds, anhydrides, cyclic anhydride compounds, phosphite compounds, phosphate compounds, borate esters, or carboxylate compounds.

In related technologies, batteries are widely used in various fields, including electric transportation tools such as electric bicycles, electric motorcycles, and electric vehicles as well as military equipment and aerospace. Batteries may be roughly classified into pouch cells and hard-shell batteries based on the hardness of their housing. Pouch cells offer advantages of higher mass/volume energy density and better safety, leading to their increasingly widespread adoption.

When assembling a plurality of pouch battery cells into an assembly, individual pouch battery cells in the battery cell assembly need to be electrically connected to form a battery cell assembly. A manner of electrical connection between two adjacent pouch battery cells in the battery cell assembly will also affect the energy density of the battery cell assembly. In the related technologies, a manner of connection between two adjacent pouch battery cells in the battery cell assembly is not conducive to further increasing the energy density of the battery cell assembly. Therefore, how to design a manner of connection between two adjacent pouch battery cells in a battery cell assembly to further increase the energy density of the battery cell assembly remains a technical challenge to be addressed.

In view of this, this application provides a battery cell assembly, including: a plurality of pouch battery cells sequentially electrically connected, where each of the pouch battery cells includes a housing, an electrode assembly, and electrode leads, the electrode assembly is disposed within the housing, the electrode leads are electrically connected to the electrode assembly, at least a portion of the electrode lead is exposed outside the housing, and the electrode leads of two adjacent pouch battery cells are directly connected.

In the foregoing battery cell assembly, by ensuring that the electrode leads of two adjacent pouch battery cells in the battery cell assembly are directly connected, components for electrical connection between the pouch battery cells can be eliminated or reduced, and the number of parts in the battery cell assembly can be reduced, thereby saving the space occupied by the components for electrical connection. This is conducive to increasing the energy density of the battery cell assembly. In addition, eliminating or reducing the components for electrical connection between the pouch battery cells can also lower the costs.

The battery apparatus disclosed in the embodiments of this application can be used for electric apparatus that use a battery apparatus as a power source or various energy storage systems that use a battery apparatus as an energy storage element. In addition to vehicles, the battery apparatus may be used in, but is not limited to, mobile phones, tablets, laptops, electric toys, electric tools, battery crickets, electric cars, ships, and spacecrafts. The electric toy may be a fixed or mobile electric toy, for example, a game console, an electric toy car, an electric toy ship, and an electric toy airplane. The spacecraft may include an airplane, a rocket, a space shuttle, a spaceship, and the like.

The electric apparatus disclosed in the embodiments of this application may be a fossil fuel vehicle, a gas vehicle, or a new energy vehicle. The new energy vehicle may be a battery electric vehicle, a hybrid electric vehicle, a range-extended electric vehicle, or the like. The vehicle is provided with a battery apparatus inside, where the battery apparatus may be arranged at the bottom, front or rear of the vehicle. The battery apparatus may be configured to supply power to the vehicle. For example, the battery apparatus may be used as an operational power supply for the vehicle. The vehicle may further include a controller and a motor, where the controller is configured to control the battery apparatus to supply power to the motor, for example, to satisfy power needs of start, navigation, and driving of the vehicle. In some embodiments of this application, the battery apparatus can be used as not only the operational power source for the vehicle but also a driving power source for the vehicle, replacing or partially replacing fossil fuel or natural gas to provide driving traction for the vehicle.

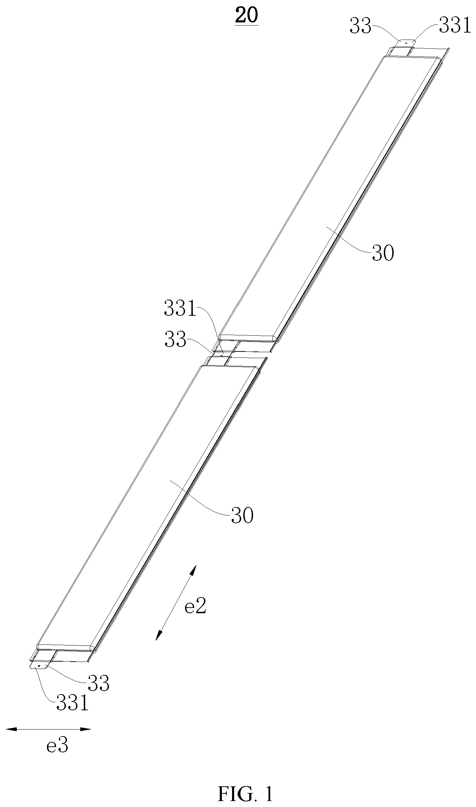

The following describes the battery cell assembly 20, battery apparatus 100, and electric apparatus 1000 according to the embodiments of this application with reference to FIG. 1 to FIG. 19.

Referring to FIG. 1 to FIG. 3, according to a first aspect, this application provides a battery cell assembly 20, including: a plurality of pouch battery cells 30 sequentially electrically connected, where each pouch battery cell 30 includes a housing 31, an electrode assembly 32, and electrode leads 33, the electrode assembly 32 is disposed within the housing 31, the electrode leads 33 are electrically connected to the electrode assembly 32, at least a portion of the electrode lead 33 is exposed outside the housing 31, and the electrode leads 33 of two adjacent pouch battery cells 30 are directly connected.

The housing 31 of the pouch battery cell 30 has good flexibility and can be formed in a pouch shape, with the electrode assembly 32 accommodated within the housing 31, making the pouch battery cell 30 a pouch battery. For example, the housing 31 may be an aluminum plastic film.

The electrode assembly 32 with the pouch battery cell 30 may be a wound electrode assembly or a stacked electrode assembly. The electrode assembly 32 includes electrode plates and tabs. The electrode assembly 32 can be formed by winding electrode plates or by stacking electrode plates. The electrode lead 33 of the pouch battery cell 30 is connected to the tab, and at least a portion of the electrode lead 33 is located outside the housing 31 as a lead-out structure of the electrode assembly 32. The electrode lead 33 can be used for electrical connection between the pouch battery cell 30 and other pouch battery cells 30 or other components.

The electrode leads 33 of two adjacent pouch battery cells 30 are directly connected, with the portion of the electrode lead 33 exposed outside the housing 31 defined as the lead-out part 331. The electrode leads 33 of two adjacent pouch battery cells 30 are directly connected, which in practice means that the lead-out parts 331 of the two electrode leads 33 are directly connected.

Direct connection between the electrode leads 33 of two adjacent pouch battery cells 30 means that the connection requires no components for electrical connection, where the electrode leads 33 of two pouch battery cells 30 are directly connected to implement electrical connection between the two adjacent pouch battery cells 30.

The electrical connection between two adjacent pouch battery cells 30 can be a series connection.

In the foregoing technical solution, by ensuring that the electrode leads 33 of two adjacent pouch battery cells 30 in the battery cell assembly 20 are directly connected, components for electrical connection between the pouch battery cells 30 can be eliminated or reduced, and the number of parts in the battery cell assembly 20 can be reduced, thereby saving the space occupied by the components for electrical connection. This is conducive to increasing the energy density of the battery cell assembly 20. In addition, eliminating or reducing the components for electrical connection between the pouch battery cells 30 can also lower the costs.

In some embodiments, the electrode leads 33 of two adjacent pouch battery cells 30 are welded together.

For example, the electrode leads 33 of two adjacent pouch battery cells 30 may be welded together using laser welding or ultrasonic welding.

In the foregoing technical solution, with the electrode leads 33 of two adjacent pouch battery cells 30 in the battery cell assembly 20 being welded together, direct connection of terminals of two adjacent pouch battery cells 30 in the battery cell assembly 20 is implemented, making the manner of connecting the electrode leads 33 of two adjacent pouch battery cells 30 in the battery cell assembly 20 simple and reliable.

In some embodiments, the electrode leads 33 of two adjacent pouch battery cells 30 are directly connected through electrically conductive adhesive.

For example, the electrically conductive adhesive may be applied to one electrode lead 33 of one of two adjacent pouch battery cells 30, and an electrode lead 33 of the other one of the two adjacent pouch battery cells 30 is connected to the electrode lead 33 with the electrically conductive adhesive; or, the electrically conductive adhesive may be applied to the electrode leads 33 of two adjacent pouch battery cells 30, and the two electrode leads 33 with the electrically conductive adhesive are connected through the electrically conductive adhesive.

In the foregoing technical solution, with the electrode leads 33 of two adjacent pouch battery cells 30 in the battery cell assembly 20 being connected through electrically conductive adhesive, direct connection of terminals of two adjacent pouch battery cells 30 in the battery cell assembly 20 is implemented, making the manner of connecting the electrode leads 33 of two adjacent pouch battery cells 30 in the battery cell assembly 20 simple and reliable.

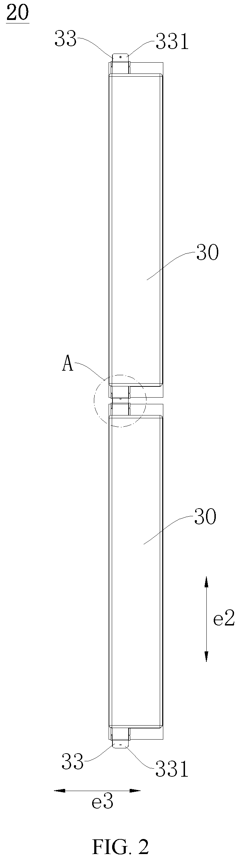

In some embodiments, referring to FIG. 2 to FIG. 4, the portion of the electrode lead 33 exposed outside the housing 31 is a lead-out part 331, and the lead-out part 331 is formed in a sheet-like shape.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. With the lead-out part 331 being designed in a sheet-like shape, the connection area between the two electrode leads 33 can be increased, thereby improving the stability and reliability of the connection between the two electrode leads 33.

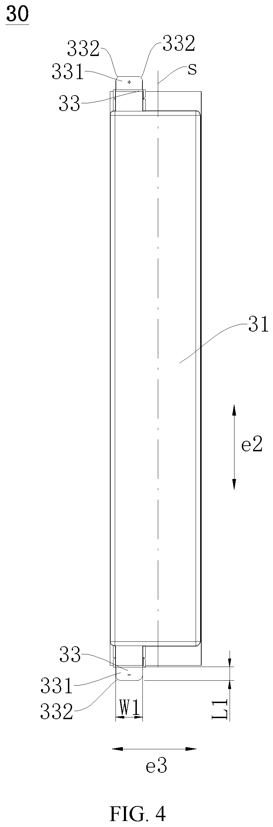

In some embodiments, referring to FIG. 4, in width direction of the pouch battery cell 30, fillets 332 are formed at two ends of the lead-out part 331 in the width direction of the pouch battery cell 30.

In the length, width, and thickness directions of the pouch battery cell 30, the pouch battery cell 30 has the largest dimension in the length direction and the smallest dimension in the thickness direction. For example, the thickness direction of the pouch battery cell 30 may refer to direction e1 in the figures, the length direction of the pouch battery cell 30 may refer to direction e2 in the figures, and the width direction of the pouch battery cell 30 may refer to direction e3 in the figures.

In the foregoing technical solution, by ensuring that fillets 332 are formed at two ends of the lead-out part 331, the risk of the lead-out part 331 scratching other structures or injuring the human body during the process of connecting the lead-out parts 331 of two electrode leads 33 can be reduced.

In some embodiments, the portion of the electrode lead 33 exposed outside the housing 31 is a lead-out part 331, and the lead-out part 331 is a flexible structure.

The flexible structure refers to a structure that has flexibility or elasticity and can deform.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. The lead-out part 331, being designed as a flexible structure, is deformable. This allows the lead-out part 331 to remain straight or be bent into a predetermined shape as needed, making the connection of the lead-out parts 331 of two electrode leads 33 and the arrangement of a plurality of two pouch battery cells 30 in the battery cell assembly 20 more flexible.

In some embodiments, referring to FIG. 4 to FIG. 6, the portion of the electrode lead 33 exposed outside the housing 31 is a lead-out part 331, and a thickness of the lead-out part 331 is 0.1 mm to 0.5 mm.

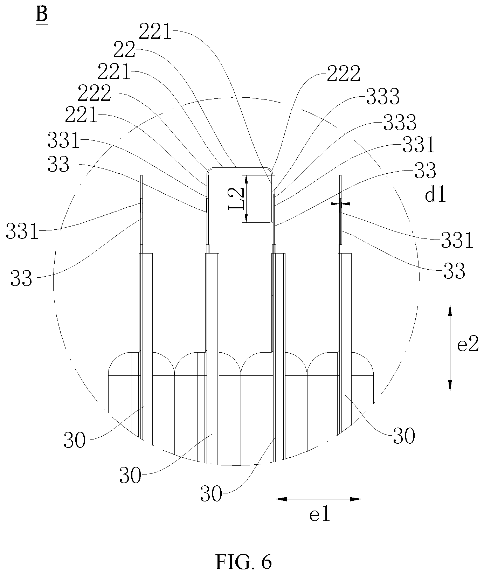

For example, referring to FIG. 6, the thickness of the lead-out part 331 is denoted as d1, and a range of d1 is 0.1 mm to 0.5 mm. For example, d1 may be 0.1 mm, 0.2 mm, 0.3 mm, 0.4 mm, 0.5 mm, or the like.

The thickness direction of the lead-out part 331 may be consistent with the thickness direction of the pouch battery cell 30.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. With the thickness of the lead-out part 331 being set to 0.1 mm to 0.5 mm, the thickness of the lead-out part 331 can effectively meet the requirements for handling high currents, and the structural strength of the lead-out part 331 can also meet demands. Such thickness also provides the lead-out part 331 with good flexibility, reducing the process difficulty of bending and deforming the lead-out part 331 when needed.

In some embodiments, referring to FIG. 2 to FIG. 4, the portion of the electrode lead 33 exposed outside the housing 31 is a lead-out part 331, and a width dimension of the lead-out part 331 in the width direction of the pouch battery cell 30 is 20 mm to 60 mm.

For example, referring to FIG. 4, the width dimension of the lead-out part 331 in the width direction of the pouch battery cell 30 is denoted as W1, and a range of W1 is 20 mm to 60 mm. For example, W1 may be 20 mm, 25 mm, 30 mm, 35 mm, 40 mm, 45 mm, 50 mm, 55 mm, 60 mm, or the like.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. With the width dimension of the lead-out part 331 in the width direction of the pouch battery cell 30 being set to 20 mm to 60 mm, the width dimension of the lead-out part 331 can effectively meet the requirements for handling high currents, and the connection area between the two electrode leads 33 can be increased, thereby improving the stability and reliability of the connection between the two electrode leads 33.

In some embodiments, referring to FIG. 2 to FIG. 4, the portion of the electrode lead 33 exposed outside the housing 31 is a lead-out part 331, and a length dimension of the lead-out part 331 in the width direction of the pouch battery cell 30 is 10 mm to 50 mm.

For example, referring to FIG. 4, the length dimension of the lead-out part 331 in the length direction of the pouch battery cell 30 is denoted as L1, and a range of L1 is 10 mm to 50 mm. For example, L1 may be 10 mm, 15 mm, 20 mm, 25 mm, 30 mm, 35 mm, 40 mm, 45 mm, 50 mm, or the like.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. With the length dimension of the lead-out part 331 in the length direction of the pouch battery cell 30 being set to 10 mm to 50 mm, the width dimension of the lead-out part 331 can effectively meet the requirements for handling high currents, and the length dimension can increase the connection area between the two electrode leads 33, thereby improving the stability and reliability of the connection between the two electrode leads 33.

In some embodiments, the portion of the electrode lead 33 exposed outside the housing 31 is a lead-out part 331, and the lead-out part 331 is made of aluminum foil or copper foil.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. Made of aluminum foil or copper foil, the lead-out part 331 provides good conductivity. Such material also provides the lead-out part 331 with good flexibility, reducing the process difficulty of bending and deforming the lead-out part 331 when needed.

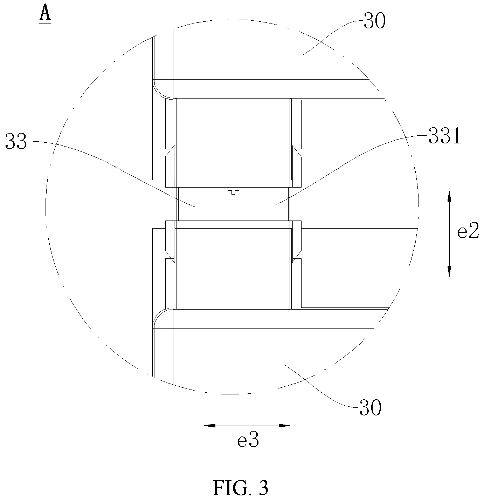

In some embodiments, referring to FIG. 3 to FIG. 6, the portion of the electrode lead 33 exposed outside the housing 31 is a lead-out part 331, the lead-out part 331 includes a connection segment 333, the connection segments 333 of two directly connected electrode leads 33 are overlapped and connected, and a ratio of a length dimension of the connection segment 333 in length direction of the pouch battery cell 30 to a length dimension of the lead-out part 331 in the length direction of the pouch battery cell 30 is 1/4 to 1/2.

The connection segments 333 of the two directly connected electrode leads 33 being overlapped means that the connection segments 333 of the two directly connected electrode leads 33 are overlapped in the thickness direction of the lead-out part 331 and are connected at that overlapped position, such as by welding at that overlapped position.

The definition of the length dimension of the connection segment 333 in the length direction of the pouch battery cell 30 includes the following cases: Case one: when the extension direction of the connection segment 333 is consistent with the length direction of the pouch battery cell 30, the length dimension of the connection segment 333 is measured in the length direction of the pouch battery cell 30; and Case two: when the lead-out part 331 is in a bent state and the extension direction of the connection segment 333 is inconsistent with the length direction of the pouch battery cell 30, the lead-out part 331 is restored to an unbent state to measure the length dimension of the connection segment 333 in the length direction of the pouch battery cell 30.

For example, referring to FIG. 3 to FIG. 6, the length dimension of the connection segment 333 in the length direction of the pouch battery cell 30 is denoted as L2, the dimension of the lead-out part 331 in the length direction of the pouch battery cell 30 is denoted as L1, and a ratio of L2 to L1 is 1/4 to 1/2. For example, the ratio of L2 to L1 is 1/4, 3/8, 2/5, 1/2, or the like.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. By ensuring that the ratio of the length dimension of the overlapping portion between two lead-out parts 331 in length direction of the pouch battery cells 30 to the dimension of the lead-out part 331 in the length direction of the pouch battery cells 30 is 1/4 to 1/2, the two electrode leads 33 can have a longer overlapping connection length, improving the stability and reliability of the connection between the two electrode leads 33. Furthermore, this allows a portion of the lead-out part 331 to remain, separating the overlapping connection portion 22 between the two electrode leads 33 from the housing 31 and facilitating direct connection of the two electrode leads 33.

In some embodiments, referring to FIG. 2 to FIG. 4, the two electrode leads 33 of the pouch battery cell 30 are located on two opposite sides in the length direction of the pouch battery cell 30.

One of the two electrode leads 33 of the pouch battery cell 30 is a positive electrode lead 33, and the other one is a negative electrode lead 33. One of the two electrode leads 33 of the pouch battery cell 30 is arranged on one side of the pouch battery cell 30 in the length direction, and the other electrode lead 33 of the pouch battery cell 30 is arranged on another side of the pouch battery cell 30 in the length direction.

When the two electrode leads 33 of the pouch battery cell 30 are located on opposite sides of the pouch battery cell 30 in the length direction, two adjacent pouch battery cells 30 can be connected in series, and a plurality of pouch battery cells 30 in the battery cell assembly 20 can also be connected in series sequentially.

In the foregoing technical solution, by ensuring that the two electrode leads 33 of the pouch battery cell 30 are located on opposite sides in the length direction of the pouch battery cell 30, a plurality of pouch battery cells 30 can be connected to create a long string when the plurality of pouch battery cells 30 are sequentially electrically connected. Fewer restrictions are imposed on the number of pouch battery cells 30 in the battery cell assembly 20, allowing for both battery cell assemblies 20 with fewer pouch battery cells 30 and battery cell assemblies 20 with more pouch battery cells 30, offering greater flexibility in the number of pouch battery cells 30 provided in the battery cell assembly 20.

In some embodiments, referring to FIG. 2 to FIG. 4, the portion of the electrode lead 33 exposed outside the housing 31 is the lead-out part 331, a middle position of the pouch battery cell 30 in the width direction is a width middle position, and in the width direction of the pouch battery cell 30, the lead-out part 331 is located on a side of the width middle position, forming a clearance space 34 on a side of the lead-out part 331 close to the width middle position.

For example, the middle position in the width direction of the pouch battery cell 30 may refer to the width middle position s of the pouch battery cell 30 in FIG. 4. For example, when the battery cell assembly 20 is installed into the box 10, and the width direction of the pouch battery cell 30 is arranged vertically, the lead-out part 331 of the pouch battery cell 30 can be located at the lower or upper end of the pouch battery cell 30, thereby forming the foregoing clearance space 34 above or below the lead-out part 331.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. With the lead-out part 331 being arranged on a side of the middle position in the width direction of the pouch battery cell 30, the clearance space 34 can be formed on a side of the lead-out part 331 close to the width middle position. This avoidance space 34 can provide room for the arrangement of other structures, enhancing the compactness of the overall structure of the battery cell assembly 20. As a result, it is conducive to increasing the energy density of the battery cell assembly 20.

In some embodiments, the plurality of pouch battery cells 30 of the battery cell assembly 20 are sequentially connected in series.

In the foregoing technical solution, sequentially connecting the plurality of pouch battery cells 30 in the battery cell assembly 20 in series can make the output voltage of the battery cell assembly 20 relatively high.

In some embodiments, the battery cell assembly 20 further includes a thermal management component, where the thermal management component is disposed on at least one side of the pouch battery cells 30 in the thickness direction, and the thermal management component is thermally connected to the pouch battery cells 30 for heat exchange with the pouch battery cells 30.

The thermal management component is disposed on at least one side of the pouch battery cells 30 in the thickness direction. For example, the thermal management component may be disposed on one side or two sides of the pouch battery cells 30 in the thickness direction. The thermal management component may be connected to the pouch battery cells 30 through thermally conductive adhesive, enabling thermal connection between the thermal management component and the pouch battery cells 30.

The thermal management component can increase or decrease the temperature of the pouch battery cells 30. For example, heat exchange channels 43 may be formed within the thermal management component for the flow of heat exchange medium. The heat exchange medium can transfer heat to the pouch battery cells 30 or absorb the heat generated by the pouch battery cells 30, thus adjusting the temperature of the pouch battery cells 30.

In the foregoing technical solution, the thermal management component is provided and disposed on at least one side of the pouch battery cells 30 in the thickness direction, and heat exchange between the thermal management component and the pouch battery cells 30 can enable temperature regulation of the pouch battery cells 30, adjusting the temperatures of the pouch battery cells 30 to an appropriate range.

In some embodiments, referring to FIG. 1 and FIG. 2, all pouch battery cells 30 in a battery cell assembly 20 are arranged in the length direction of the pouch battery cells 30.

For example, two electrode leads 33 of the pouch battery cell 30 are located on two sides of the pouch battery cell 30 in length direction. A positive electrode lead 33 of one of the two adjacent pouch battery cells 30 in the battery cell assembly 20 is directly connected to a negative electrode lead 33 of the other of the two adjacent pouch battery cells 30, so that all the pouch battery cells 30 in the battery cell assembly 20 can be arranged in the length direction of the pouch battery cells 30.

In the foregoing technical solution, arranging all pouch battery cells 30 in the battery cell assembly 20 in the length direction of the pouch battery cells 30 can simplify the arrangement of the plurality of pouch battery cells 30 in the battery cell assembly 20, making the process of assembling a plurality of pouch battery cells 30 to form a battery cell assembly 20 relatively straightforward.

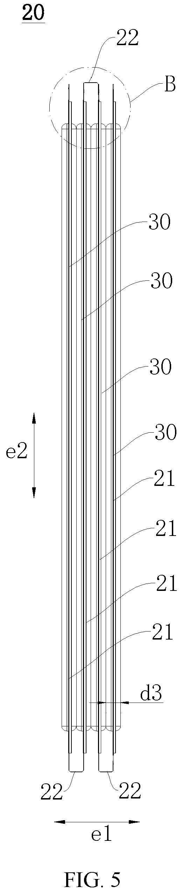

In some embodiments, referring to FIG. 5 to FIG. 8, all the pouch battery cells 30 of the battery cell assembly 20 are divided into multiple sub-battery cell assemblies 21, the multiple sub-battery cell assemblies 21 are arranged in the thickness direction of the pouch battery cells 30, and each of the sub-battery cell assemblies 21 includes one pouch battery cell 30 or multiple pouch battery cells 30 arranged in the length direction of the pouch battery cells 30.

In the foregoing technical solution, dividing the plurality of pouch battery cells 30 of the battery cell assembly 20 into multiple sub-battery cell assemblies 21 arranged in the thickness direction of the pouch battery cells 30 can make the arrangement of the battery cell assembly 20 compact in overall structure. Furthermore, the manner of arranging the plurality of pouch battery cells 30 in the battery cell assembly 20 can be set as required, also offering more flexibility in the arrangement of the plurality of pouch battery cells 30 in the battery cell assembly 20.

In some embodiments, referring to FIG. 5 to FIG. 8, the portion of the electrode lead 33 exposed outside the housing 31 is the lead-out part 331, the lead-out parts 331 of the two directly connected electrode leads 33 in the two adjacent sub-battery cell assemblies 21 are connected and jointly form a connection part 22, and at least a portion of the connection part 22 is curved.

At least a portion of the connection part 22 being curved means that connection part 22 extends in a non-linear manner as a whole. For example, when the lead-out parts 331 of the electrode leads 33 of two adjacent pouch battery cells 30 are directly connected to form a connection part 22, before being bent or curved, the connection part 22 may extend linearly as a whole. For example, the connection part 22 may extend linearly as a whole in the length direction of the pouch battery cell 30. After the connection part 22 undergoes bending or curving processing, the connection part 22 extends in a non-linear manner as a whole. For example, the connection part 22 may be "U"-shaped or "C"-shaped.

In the foregoing technical solution, the portion of the electrode lead 33 exposed outside the housing 31 is defined as the lead-out part 331, and the electrode leads 33 of two adjacent pouch battery cells 30 are directly connected, which in practice means that the lead-out parts 331 of the two electrode leads 33 are directly connected. The connection part 22 is formed jointly by the lead-out parts 331 of the two directly connected electrode leads 33 in the two adjacent battery cell assemblies 20 and is provided in a bent shape, so that the multiple sub-battery cell assemblies 21 in the battery cell assembly 20 can be easily arranged in the thickness direction of pouch battery cells 30.

In some embodiments, referring to FIG. 5 to FIG. 8, in a direction of connection between the two directly connected electrode leads 33, the connection part 22 includes multiple straight sections 221 sequentially connected, the two adjacent straight sections 221 are arranged at an angle, and the two adjacent straight sections 221 are connected by an arc section 222, the arc section 222 extending along an arc, and the straight section 221 extending along a straight line.

Two adjacent straight sections 221 being arranged at an angle means that the angle between two adjacent straight sections 221 is greater than 0° and less than 180°. For example, as shown in FIG. 6, the angle between two adjacent straight sections 221 is α, and a range of α may be 80° to 100°. For example, α may be 90°.

For example, referring to FIG. 6, the connection part 22 includes three straight sections 221 sequentially connected, with an arc section 222 connected between two adjacent straight sections 221. The straight section 221 located between two arc sections 222 may extend in the thickness direction of the pouch battery cell 30, while the remaining two straight sections 221 may extend in the length direction of the pouch battery cell 30.

In the foregoing technical solution, by providing the connection part 22 formed by the two directly connected lead-out parts 331 in a bent shape and connecting the adjacent straight sections 221 of the connection part 22 by an arc section 222, structures of the connecting part 22 with sharp corners or edges can be reduced, decreasing the stress concentration at the sharp corners or edges of the connecting part 22.

In some embodiments, referring to FIG. 5 to FIG. 8, a position of connection between the two directly connected electrode leads 33 is located on the straight section 221.

For example, referring to FIG. 6, the lead-out part 331 of the electrode lead 33 includes a connection segment 333. The connection segments 333 of the two directly connected electrode leads 33 are overlapped and connected in the thickness direction of the lead-out part 331. The connection position of two directly connected electrode leads 33 is at the overlapped and connected position of the connection segments 333 of the two directly connected electrode leads 33.

For example, referring to FIG. 6, the connection part 22 includes three straight sections 221 sequentially connected, with an arc section 222 connected between adjacent straight sections 221. The straight section 221 between two arc sections 222 may extend in the thickness direction of the pouch battery cell 30, while the remaining two straight sections 221 may extend in the length direction of the pouch battery cell 30. The connection position of two directly connected electrode leads 33 may be located on the straight section 221 extending in the length direction of the pouch battery cell 30.

In the foregoing technical solution, by ensuring that the position of connection between the two directly connected electrode leads 33 is located on the straight section of the connection part 22 instead of on the arc section 222, the position of connection between the two directly connected electrode leads 33 can be in a position with less stress, thereby reducing the influence of stress on the connection between the electrode leads 33 and improving the reliability and stability of the connection between the two directly connected electrode leads 33.

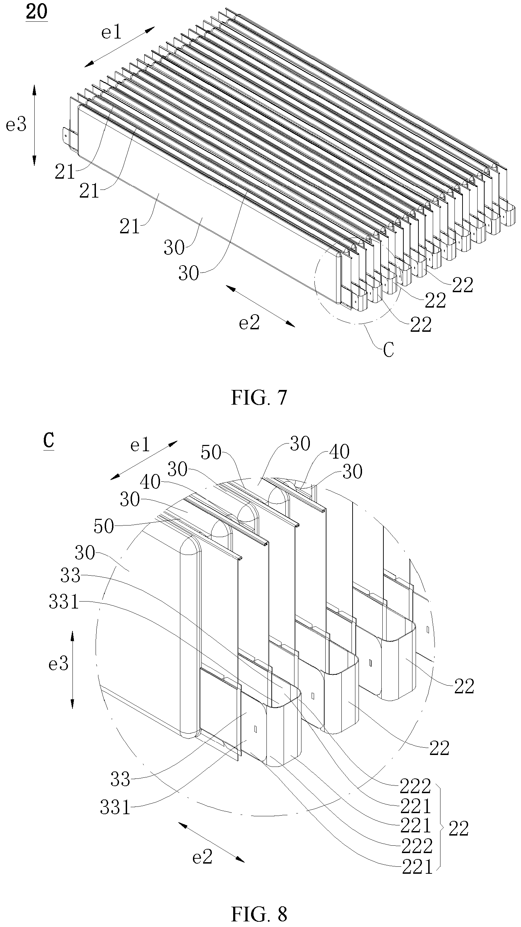

In some embodiments, referring to FIG. 7 to FIG. 9, the battery cell assembly 20 includes a reinforced partition 40. The reinforced partition 40 is sandwiched between two adjacent pouch battery cells 30. The reinforced partition 40 has a higher hardness than the housing 31.

For example, the reinforced partition 40 may be a metal plate, and the housing 31 may be an aluminum plastic film.

The reinforced partition 40 is sandwiched between two adjacent pouch battery cells 30, which includes the following cases: A reinforced partition 40 is provided between some adjacent pouch battery cells 30, while no reinforcing partition 40 is provided between other adjacent pouch battery cells 30; or, a reinforced partition 40 is provided between each two adjacent pouch battery cells 30.

The reinforced partition 40 may be adhesively fixed to the housing 31 of the pouch battery cell 30.

In the foregoing technical solution, the reinforced partitions 40 are arranged between adjacent pouch battery cells 30, with the reinforced partition 40 having a higher hardness than the housing 31, facilitating the grouping of a plurality of pouch battery cells 30. This can enhance the overall rigidity of the battery cell assembly 20 formed by grouping a plurality of pouch battery cells 30, facilitating installation of the battery cell assembly 20 formed by grouping the plurality of pouch battery cells 30 and reducing deformation of the grouped pouch battery cells 30.

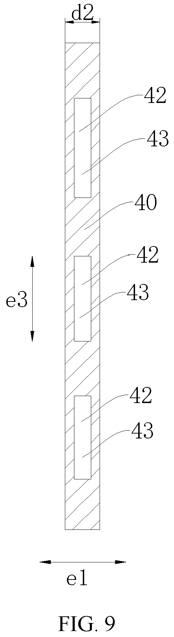

In some embodiments, referring to FIG. 9, a thickness of the reinforced partition 40 is 0.8 mm to 2.0 mm.

The thickness direction of the reinforced partition 40 is consistent with the thickness direction of the pouch battery cell 30.

For example, the thickness of the reinforced partition 40 is denoted as d2, and a range of d2 is 0.8 mm to 2.0 mm. For example, d2 may be 0.8 mm, 1.0 mm, 1.2 mm, 1.4 mm, 1.6 mm, 1.8 mm, 2.0 mm, or the like.

In the foregoing technical solution, with the thickness of the reinforced partition 40 being set to not less than 0.8 mm, the reinforced partitions 40 can effectively reinforce the battery cell assembly 20 formed by grouping a plurality of pouch battery cells 30. In addition, with the thickness of the reinforced partition 40 being set to be no more than 2.0 mm, the space occupied by the reinforced partition 40 can be reduced while the reinforced partition 40 plays an effective reinforcing role, enabling the battery cell assembly 20 to have a relatively high energy density. With the thickness of the reinforced partition 40 being set to within the range of 0.8 mm to 2.0 mm, the overall strength and rigidity of the battery cell assembly 20 can be effectively improved, and the overall energy density of the battery cell assembly 20 can be made relatively high.

In some embodiments, the reinforced partition 40 is an aluminum plate, an aluminum alloy plate, a copper plate, or a steel plate.

In the foregoing technical solution, by providing the reinforced partition 40 made of a material such as aluminum plate, aluminum alloy plate, copper plate, or steel plate, the reinforced partition 40 can have relatively high strength and hardness, thereby better improving the overall rigidity of the plurality of grouped pouch battery cells 30 and more effectively reducing the deformation of the pouch battery cells 30 in the battery cell assembly.

In some embodiments, the reinforced partition 40 is a solid structure.

In the foregoing technical solution, by providing the reinforced partition 40 as a solid structure, the reinforced partition 40 can have good structural strength and rigidity and play an effective reinforcing role even when its thickness is relatively small. This is conducive to enabling the battery cell assembly 20 as a whole to have good strength and rigidity while also allowing the battery cell assembly 20 as a whole to have a relatively high volumetric energy density.

In some embodiments, referring to FIG. 9, a cavity 42 is formed inside the reinforced partition 40.

For example, referring to FIG. 9, multiple cavities 42 formed inside the reinforced partition 40 may be provided and spaced apart, and the multiple cavities 42 inside the reinforced partition 40 may be spaced apart in the width direction of the pouch battery cell 30. Each cavity 42 may extend along the length direction of the pouch battery cell 30.

In the foregoing technical solution, with the cavity 42 being provided inside the reinforced partition 40, the reinforced partition 40 enhances the overall rigidity of the grouped pouch battery cells 30, and the cavity 42 inside the reinforced partition 40 can play the role of absorbing the swelling and deformation of the pouch battery cells 30. The cavity 42 inside the reinforced partition 40 can provide buffering for the deformation of adjacent pouch battery cells 30, and it is conducive to reducing the weight of the reinforced partition 40.

In some embodiments, referring to FIG. 9, the cavity 42 includes a heat exchange channel 43 for the flow of heat exchange medium.

When at least a portion of the cavity 42 in the reinforced partition 40 is used as the heat exchange channel 43, the reinforced partition 40 can serve as at least a portion of the thermal management component.

For example, the reinforced partition 40 may be connected to the pouch battery cells 30 through thermally conductive adhesive, facilitating heat exchange between the reinforced partition 40 and the pouch battery cells 30. As the heat exchange medium flows through the heat exchange channel 43, it can adjust the temperature of the pouch battery cells 30, for example, by increasing or decreasing the temperature of the pouch battery cells 30.

In the foregoing technical solution, at least a portion of the cavity 42 inside the reinforced partition 40 is made to form a heat exchange channel 43. When the heat exchange medium flows through the heat exchange channel 43 inside the reinforced partition 40, the heat exchange medium can exchange heat with the pouch battery cells 30, implementing effective temperature regulation of the pouch battery cells 30.

In some embodiments, the pouch battery cell 30 is any one of a lithium iron phosphate battery cell, a ternary lithium battery cell, and a solid-state battery cell.

For example, the pouch battery cell 30 may be a lithium iron phosphate battery cell. For another example, the pouch battery cell 30 may be a ternary lithium battery cell. For yet another example, the pouch battery cell 30 may be a solid-state battery cell.

In the foregoing technical solution, in an embodiment where the pouch battery cell 30 is a lithium iron phosphate battery cell, the safety of the pouch battery cell 30 can be improved, and the cycle life of the pouch battery cell 30 can be extended; in an embodiment where the pouch battery cell 30 is a ternary lithium battery cell, the energy density of the pouch battery cell 30 can be increased, extending the driving range; and in an embodiment where the pouch battery cell 30 is a solid-state battery cell, not only can the energy density be increased, but also the safety can be enhanced.

In some embodiments, when the pouch battery cell 30 is a lithium iron phosphate battery cell, a weight ratio of a positive electrode active material, a positive electrode binder, and a positive electrode conductive agent in a positive electrode material of the pouch battery cell 30 is 96:(1 to 3):(1 to 3); and when the pouch battery cell 30 is a ternary lithium battery cell, a weight ratio of a positive electrode active material, a positive electrode binder, and a positive electrode conductive agent in a positive electrode material of the pouch battery cell 30 is 96:(2 to 3):(1 to 2).

The weight ratio of the positive electrode active material, the positive electrode binder, and the positive electrode conductive agent refers to a mass ratio of the positive electrode active material, the positive electrode binder, and the positive electrode conductive agent.

The weight ratio of 96:(1 to 3):(1 to 3) includes the following cases: a weight ratio of 96:1:1, 96:1:2, 96:1:3, 96:2:1, 96:2:3, 96:3:1, 96:3:2, 96:3:3, or the like.

The weight ratio of 96:(2 to 3):(1 to 2) includes the following cases: a weight ratio of 96:2:1, 96:2:2, 96:3:1, 96:3:2, or the like.

In the foregoing technical solution, in an embodiment where the pouch battery cell 30 is a lithium iron phosphate battery cell, the use of the positive electrode active material, positive electrode binder, and positive electrode conductive agent in the positive electrode material in the foregoing ratio can improve the electrochemical performance and mechanical stability of the pouch battery cell 30; and in an embodiment where the pouch battery cell 30 is a ternary lithium battery cell, the use of the positive electrode active material, positive electrode binder, and positive electrode conductive agent in the positive electrode material in the foregoing ratio can increase the energy density and cycle life of the pouch battery cell 30.

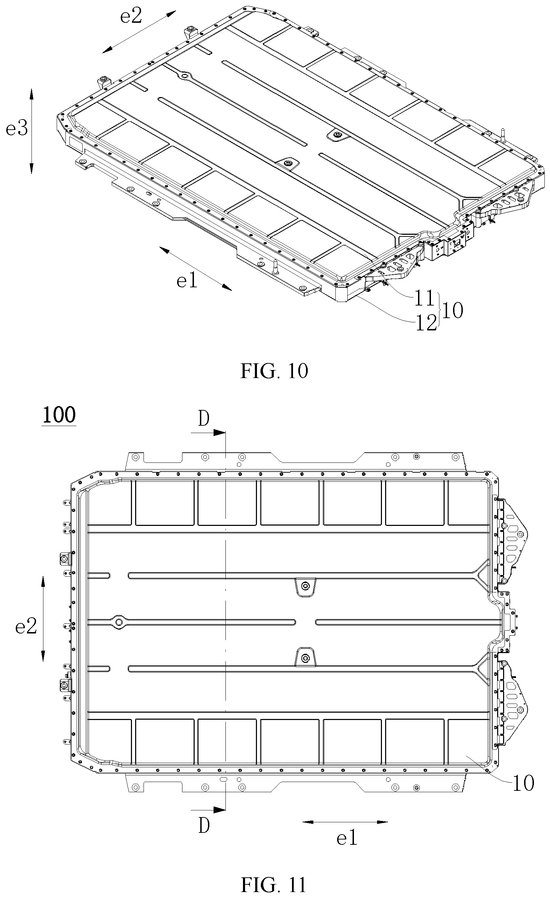

According to a second aspect, referring to FIG. 10 to FIG. 13, this application provides a battery apparatus 100, including a box 10 and battery cell assemblies 20, the battery cell assemblies 20 being disposed inside the box 10, where the battery cell assembly 20 is the battery cell assembly 20 according to the first aspect of this application.

For example, referring to FIG. 10, the box 10 may include a bottom plate 12 and a top cover 11, where the top cover 11 covers the upper end of the bottom plate 12 and, together with the bottom plate 12, defines a space for accommodating the battery cell assemblies 20. The box 10 can serve to protect the battery cell assemblies 20.

In the foregoing technical solution, the battery apparatus 100 includes the foregoing battery cell assembly 20. This can eliminate or reduce components for electrical connection between pouch battery cells 30 and reduce the number of parts in the battery cell assembly 20, thereby saving the space occupied by the components for electrical connection, which is conducive to increasing the energy density of the battery cell assembly 20 and increasing the density of the battery apparatus 100. In addition, eliminating or reducing the components for electrical connection between the pouch battery cells 30 can also lower the costs.

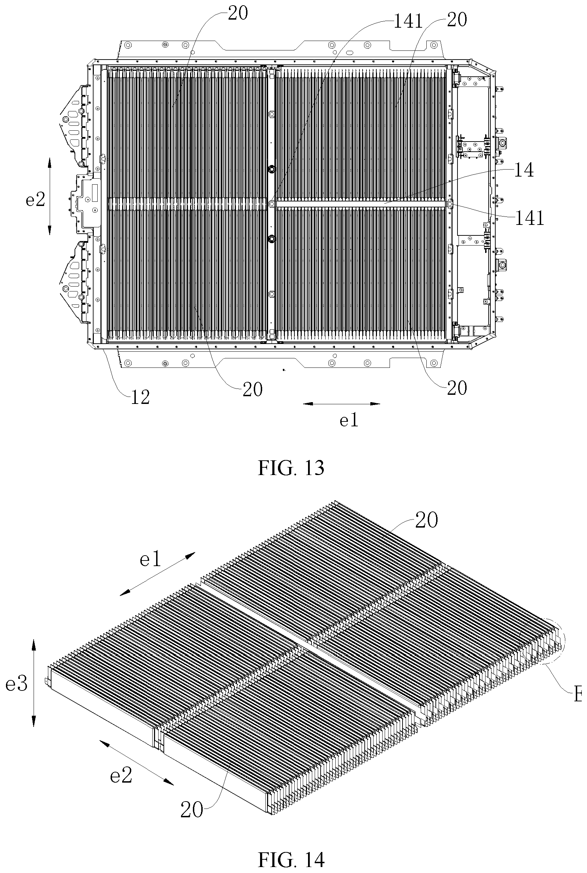

In some embodiments, referring to FIG. 13 to FIG. 16, a plurality of battery cell assemblies 20 are provided.

The plurality of battery cell assemblies 20 may be arranged in the same direction or in different directions inside the box 10.

In the foregoing technical solution, the battery apparatus 100 including a plurality of battery cell assemblies 20 can enable the battery apparatus 100 to have a higher electrical capacity and have a higher overall energy density.

In some embodiments, referring to FIG. 13 to FIG. 16, at least some of the battery cell assemblies 20 are arranged in a first direction, and thickness direction of the pouch battery cells 30 is all aligned with the first direction.

At least some of the battery cell assemblies 20 are arranged in the first direction. For example, either some of the battery cell assemblies 20 are arranged in the first direction, or all battery cell assemblies 20 are arranged in the first direction.

In the foregoing technical solution, at least some of the plurality of battery cell assemblies 20 are arranged in the thickness direction of the pouch battery cells 30, which can make the arrangement of the plurality of battery cell assemblies 20 inside the battery apparatus 100 more compact, helping increase the energy density of the battery apparatus 100.

In some embodiments, the plurality of battery cell assemblies 20 are connected in series and/or in parallel.

The plurality of battery cell assemblies 20 being connected in series and/or in parallel means that, for example, the plurality of battery cell assemblies 20 are in series, or for another example, the plurality of battery cell assemblies 20 are in parallel, or for yet another example, some of the plurality of battery cell assemblies 20 are in series while others are in parallel, so that the plurality of battery cell assemblies 20 are in hybrid series and parallel connection.

In the foregoing technical solution, by connecting the plurality of battery cell assemblies 20 in series, the battery apparatus 100 can have a relatively high output voltage; by connecting the plurality of battery cell assemblies 20 in parallel, the battery apparatus 100 can have a relatively high output current; or by ensuring that the plurality of battery cell assemblies 20 are in hybrid series and parallel connection, the battery apparatus 100 can have both a relatively high output voltage and a relatively high output current.

In some embodiments, referring to FIG. 10 to FIG. 13, the thickness direction of the pouch battery cells 30 is all aligned with the first direction, length direction of the pouch battery cells 30 is all aligned with a second direction, width direction of the pouch battery cells 30 is all aligned with a third direction, the first direction, the second direction, and the third direction intersect with each other, and a bottom plate 12 and a top cover 11 of the box 10 are respectively located on two opposite sides of the battery cell assembly 20 in the second direction.

For example, the first direction may refer to direction e1 in the figures, the second direction may refer to direction e2, and the third direction may refer to direction e3. The first direction, the second direction, and the third direction may be set perpendicular to each other.

For example, when the third direction is the vertical direction, the bottom plate 12 is located below the battery cell assembly 20, and the top cover 11 is located above the battery cell assembly 20.

In the foregoing technical solution, the thickness direction of the plurality of pouch battery cells 30 is all aligned with the first direction, the length direction of the plurality of pouch battery cells 30 is all aligned with a second direction, the width direction of the plurality of pouch battery cells 30 is all aligned with a third direction, and a bottom plate 12 and a top cover 11 of the box 10 are respectively arranged on two sides of the battery cell assembly 20 in the second direction. This enables a compact and simplified arrangement of the plurality of pouch battery cells 30 within the battery apparatus 100, facilitating the subsequent assembly of the plurality of grouped pouch battery cells 30 into the box 10.

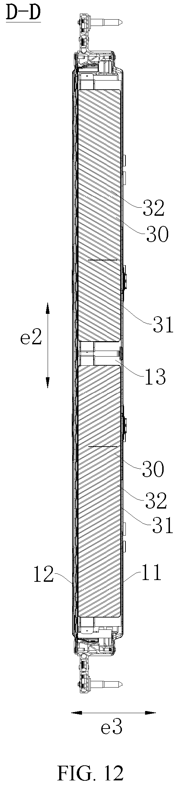

In some embodiments, referring to FIG. 12 and FIG. 13, the box 10 has an accommodating cavity 13 for accommodating the battery cell assembly 20, a constraint piece 14 extending in the first direction is provided in the box 10, and two ends of the constraint piece 14 in length direction are respectively connected to two side walls of the accommodating cavity 13 in the first direction.

Two ends of the constraint piece 14 in length direction being respectively connected to two side walls of the accommodating cavity 13 in the first direction means that one end of constraint piece 14 in the length direction is connected to one side wall of the accommodating cavity 13 in the first direction, and the other end of constraint piece 14 in the length direction is connected to the other side wall of the accommodating cavity 13 in the first direction.

For example, there may be one accommodating cavity 13 inside the box 10, or there may be multiple spaced accommodating cavities 13 inside the box 10. For example, in the example of FIG. 13, a reinforcing beam is provided inside box 10. For example, the reinforced beam may be arranged on the bottom plate 12 of the box 10. The reinforcing beam can enhance the structural strength and rigidity of the bottom plate 12. The reinforcing beam may extend along the second direction, dividing the space inside the box 10 into two accommodating cavities 13 arranged in the first direction.

When there is one accommodating cavity 13 inside the box 10, the two ends of the constraint piece 14 in the length direction are connected to the two side walls of the box 10 in the first direction; and when the foregoing reinforcing beam is provided inside the box 10, one end of the constraint piece 14 in the length direction is connected to the side wall of the box 10, and the other end of the constraint piece 14 in the length direction is connected to the reinforcing beam.

For example, in the example of FIG. 13, at least some of the battery cell assemblies 20 are arranged in the first direction, with the thickness direction of the pouch battery cells 30 aligned in the first direction. The two ends of the constraint piece 14 in the length direction are connected to the two side walls of the accommodating cavity 13 in the first direction. The constraint piece 14 tightens against the two side walls of the accommodating cavity 13 in the first direction. In this way, the constraint piece 14 can constrain and suppress the swelling and deformation of the pouch battery cells 30 in their thickness direction.

In the foregoing technical solution, the constraint piece 14 extending in the thickness direction of the pouch battery cells 30 is provided inside the box 10, and the two ends of the constraint piece 14 in the length direction are respectively connected and fixed to the box 10, so that the constraint piece 14 tightens against the two side walls of the accommodating cavity 13 in the first direction. In this way, the constraint piece 14 can constrain and suppress the swelling and deformation of the pouch battery cells 30 in their thickness direction.

In some embodiments, referring to FIG. 13, the two ends of the constraint piece 14 are connected and fixed to the box 10 by fasteners 141.

For example, the fastener 141 may be a combination of a bolt and nut.

In the foregoing technical solution, by ensuring that the two ends of the constraint piece 14 are fixed to the box 10 with fasteners 141, the two ends of the constraint piece 14 can be more securely locked to the box 10, and the constraint piece 14 can better constrain and suppress the swelling and deformation of the pouch battery cells 30 in their thickness direction.

In some embodiments, the constraint piece 14 includes a constraint belt and an insulating layer, the constraint belt being a metal piece, and the insulating layer covering an outer surface of the constraint belt.

The insulating layer may be a plastic insulating layer.

In the foregoing technical solution, by providing the constraint piece 14 including a constraint belt and an insulating layer, with the constraint belt being a metal piece, the constraint piece 14 can have good structural strength, so that the constraint piece 14 can better constrain and suppress the swelling and deformation of the pouch battery cells 30 in their thickness direction. Furthermore, by ensuring that the exterior of the constraint piece 14 is covered with an insulating layer, problems such as short circuits between the constraint piece 14 and the pouch battery cells 30 or other components due to electrical contact can be prevented, while the constraint piece 14 uses the constraint belt made of a metal material for better constraint and suppression of the swelling and deformation of the pouch battery cells 30 in their thickness direction.

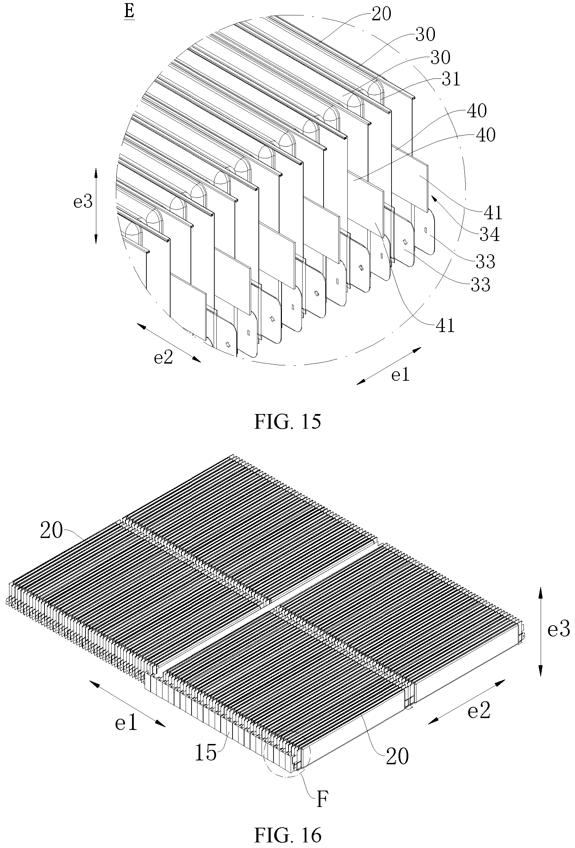

In some embodiments, referring to FIG. 14 and FIG. 15, in the first direction, a reinforced partition 40 is sandwiched between at least some of two adjacent pouch battery cells 30, the reinforced partition 40 is connected to the housing 31, and the reinforced partition 40 has a higher hardness than the housing 31.

For example, the reinforced partition 40 may be a metal plate, and the housing 31 may be an aluminum plastic film.

The reinforced partition 40 is sandwiched between at least some of two adjacent pouch battery cells 30, which include the following cases: A reinforced partition 40 is provided between some adjacent pouch battery cells 30, while no reinforcing partition 40 is provided between other adjacent pouch battery cells 30; or, a reinforced partition 40 is provided between each two adjacent pouch battery cells 30.

The reinforced partition 40 may be adhesively fixed to the housing 31 of the pouch battery cell 30.

In the foregoing technical solution, by providing a reinforced partition 40 between at least some of two adjacent pouch battery cells 30 and with a hardness higher than that of the housing 31, a plurality of pouch battery cells 30 can be conveniently grouped, increasing the overall rigidity of the plurality of grouped pouch battery cells 30, facilitating subsequent installation of the plurality of grouped pouch battery cells 30, and mitigating the deformation of the pouch battery cells 30 after grouped.

In some embodiments, referring to FIG. 5 to FIG. 9, a thickness of the reinforced partition 40 is less than that of the pouch battery cell 30.

The thickness direction of the reinforced partition 40 is consistent with the thickness direction of the pouch battery cell 30.

For example, the thickness of the reinforced partition 40 is denoted as d2, and the thickness of the pouch battery cell 30 is denoted as d3, where d2 is less than d3. For example, the range of d2 is 0.8 mm to 2.0 mm. For example, d2 is 0.8 mm, 1.0 mm, 1.2 mm, 1.4 mm, 1.6 mm, 1.8 mm, 2.0 mm, or the like.

In the foregoing technical solution, by ensuring the thickness of the reinforced partition 40 is less than that of the pouch battery cell 30, the occupied space of the reinforced partition 40 can be reduced while the overall rigidity of grouped pouch battery cells 30 is enhanced, especially in the thickness direction of the pouch battery cell 30, resulting in a higher overall energy density of the battery apparatus 100.

In some embodiments, the reinforced partition 40 is a metal plate.

For example, the reinforced partition 40 may be an aluminum plate, an aluminum alloy plate, a copper plate, or a steel plate.

In the foregoing technical solution, by providing the reinforced partition 40 as a metal plate, the reinforced partition 40 can have higher strength and hardness, thereby better improving the overall rigidity of the grouped pouch battery cells 30 and reducing the deformation of the pouch battery cells 30 in the battery cell assembly.

In some embodiments, the reinforced partition 40 is a thermally conductive piece and is thermally connected to the housing 31.

For example, the reinforced partition 40 may be thermally connected to the housing 31 through thermally conductive adhesive. Because the reinforced partition 40 is a thermally conductive piece, the reinforced partition 40 can transfer heat to the pouch battery cells 30 or absorb the heat generated by the pouch battery cells 30, thus adjusting the temperature of the pouch battery cells 30.

In the above technical solution, by providing the reinforced partition 40 as a thermally conductive piece and thermally connecting it to the housing 31, the reinforced partition 40 not only enhances the overall rigidity of the grouped pouch battery cells 30, but also provides a thermal management function. Heat exchange between the reinforced partition 40 and the pouch battery cells 30 can adjust the temperature of the pouch battery cells 30 so that the pouch battery cells 30 operate in a suitable temperature range.

In some embodiments, the reinforced partition 40 is a solid structure.

In the foregoing technical solution, by providing the reinforced partition 40 as a solid structure, the reinforced partition 40 can have good structural strength and rigidity and play an effective reinforcing role even when its thickness is relatively small. This is conducive to enabling the battery cell assembly 20 as a whole to have good strength and rigidity while also allowing the battery cell assembly 20 as a whole to have a relatively high volumetric energy density.

In some embodiments, referring to FIG. 9, a cavity 42 is formed inside the reinforced partition 40.

For example, referring to FIG. 9, multiple cavities 42 formed inside the reinforced partition 40 may be provided and spaced apart, and the multiple cavities 42 inside the reinforced partition 40 may be spaced apart in the width direction of the pouch battery cell 30. Each cavity 42 may extend along the length direction of the pouch battery cell 30.

In the foregoing technical solution, with the cavity 42 being provided inside the reinforced partition 40, the reinforced partition 40 enhances the overall rigidity of the grouped pouch battery cells 30, and the cavity 42 inside the reinforced partition 40 can play the role of absorbing the swelling and deformation of the pouch battery cells 30. The cavity 42 inside the reinforced partition 40 can provide buffering for the deformation of adjacent pouch battery cells 30, and it is conducive to reducing the weight of the reinforced partition 40.

In some embodiments, referring to FIG. 9, the cavity 42 includes a heat exchange channel 43 for the flow of heat exchange medium.

In the foregoing technical solution, at least a portion of the cavity 42 inside the reinforced partition 40 is made to form a heat exchange channel 43. When the heat exchange medium flows through the heat exchange channel 43 inside the reinforced partition 40, the heat exchange medium can exchange heat with the pouch battery cells 30, implementing effective temperature regulation of the pouch battery cells 30.

When at least a portion of the cavity 42 in the reinforced partition 40 is used as the heat exchange channel 43, the reinforced partition 40 can serve as at least a portion of the thermal management component.

For example, the reinforced partition 40 may be connected to the pouch battery cells 30 through thermally conductive adhesive, facilitating heat exchange between the reinforced partition 40 and the pouch battery cells 30. As the heat exchange medium flows through the heat exchange channel 43, it can adjust the temperature of the pouch battery cells 30, for example, by increasing or decreasing the temperature of the pouch battery cells 30.

In some embodiments, referring to FIG. 8, a buffer layer 50 is sandwiched between at least some of two adjacent pouch battery cells 30, and the buffer layer 50 has a lower hardness than the housing 31.

The buffer layer 50 being sandwiched between at least some of two adjacent pouch battery cells 30 means that the buffer layer 50 is sandwiched between some of two adjacent pouch battery cells 30, or the buffer layer 50 is sandwiched between each two adjacent pouch battery cells 30.

In the foregoing technical solution, by providing a buffer layer 50 between at least some of two adjacent pouch battery cells 30 and ensuring the buffer layer 50 has a lower hardness than the housing 31, the buffer layer 50 can absorb swelling deformation of the pouch battery cells 30, providing buffering for the deformation of adjacent pouch battery cells 30.

In some embodiments, the buffer layer 50 is a foam layer or a silicone layer.

In the foregoing technical solution, by providing a reinforced partition 40 between at least some of adjacent pouch battery cells 30 to enhance the rigidity of the battery cell assembly 20 and providing the buffer layer 50 as a foam or silicone layer, the buffer layer 50 can have good flexibility and elastic deformation ability, effectively absorbing swelling and deformation of pouch battery cells 30. Furthermore, the foam or silicone layers have a lighter mass, contributing to reduced overall weight of the battery apparatus 100.

In some embodiments, referring to FIG. 7 and FIG. 8, the buffer layer 50 and the reinforced partition 40 are alternately arranged in the first direction.

In the foregoing technical solution, by alternately arranging the buffer layers 50 and reinforced partitions 40 between pouch battery cells 30 in the arrangement direction of the pouch battery cells 30, the swelling and deformation of the plurality of pouch battery cells 30 in the thickness direction can receive good buffering and absorption while the plurality of pouch battery cells 30 can be uniformly reinforced.

In some embodiments, referring to FIG. 13 to FIG. 17, the electrode leads 33 are located on two opposite sides of the pouch battery cell 30 in the second direction, the second direction intersects with the first direction, and in the second direction and in a direction close to a side wall of the box 10, an end part of the reinforced partition 40 protrudes out of the housing 31 of the pouch battery cell 30 to form a fixed end 41, and the fixed end 41 is connected to the box 10.

One of the two electrode leads 33 of the pouch battery cell 30 is a positive electrode lead 33, and the other one is a negative electrode lead 33. One of the two electrode leads 33 of the pouch battery cell 30 is arranged on one side of the pouch battery cell 30 in the second direction, and the other electrode lead 33 of the pouch battery cell 30 is arranged on another side of the pouch battery cell 30 in the second direction.

When a cavity 42 is formed inside the reinforced partition 40, the cavity 42 may not extend to the fixed end 41; that is, the fixed end 41 of the reinforced partition 40 may be a solid structure.

In the foregoing technical solution, by ensuring that the end part of the reinforced partition 40 protrudes in the second direction out of the housing 31 of the pouch battery cell 30 and is connected to the box 10, this enables reliable connection and fixation between the battery cell assembly 20 and the side wall of the box 10 since the reinforced partitions 40 are sandwiched between a plurality of pouch battery cells 30, and together with the plurality of pouch battery cells 30, they form a battery cell assembly 20. The overall hardness of the reinforced partition 40 exceeds that of the housing 31 of the pouch battery cell 30, so that the connection between the battery cell assembly 20 and the box 10 becomes more reliable, thus improving the installation reliability and stability of the battery cell assembly 20 in the box 10.

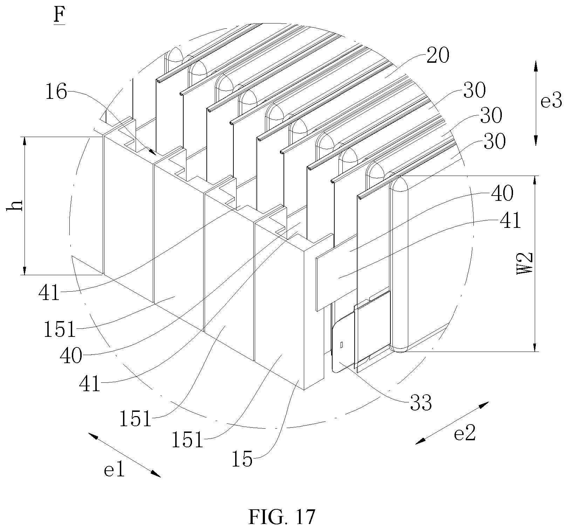

In some embodiments, referring to FIG. 17, the fixed end 41 and the electrode lead 33 located on a same side in the second direction are arranged in the third direction, and the first direction, the second direction, and the third direction intersect with each other.

The width dimension of the fixed end 41 of the reinforced partition 40 in the third direction may be smaller than the width dimension of other portions of the reinforced partition 40 in the third direction.

For example, when the third direction is the vertical direction, the fixed end 41 of the reinforced partition 40 may be located above the electrode lead 33 located on the same side in the second direction.

In the foregoing technical solution, the fixed end 41 of the reinforced partition 40 and the electrode lead 33 on the same side in the second direction are arranged in the third direction, so that the space inside the box 10 in the third direction can be well utilized to arrange the fixed end 41 of the reinforced partition 40 and the electrode lead 33. This effectively prevents contact or interference between the fixed end 41 of the reinforced partition 40 and the electrode lead 33 located on the same side in the second direction due to their close proximity and allows for full utilization of the space inside the box 10, resulting in a compact internal structure of the battery apparatus 100 and contributing to increased energy density of the battery apparatus 100.

In some embodiments, referring to FIG. 16 and FIG. 17, a mounting bracket 15 is provided inside the box 10, the mounting bracket 15 is located on at least one side of the battery cell assembly 20 in the second direction and is connected to the box 10, and the fixed end 41 is connected to mounting bracket 15.

The mounting bracket 15 being located on at least one side of the battery cell assembly 20 in the second direction means that the mounting bracket 15 may be located on one side or two sides of the battery cell assembly 20 in the second direction.

For example, the mounting bracket 15 may include multiple sub-mounting brackets 151. The multiple sub-mounting brackets 151 of the mounting bracket 15 may be arranged in the first direction, and two adjacent sub-mounting brackets 151 may be connected. The multiple sub-mounting brackets 151 may be independently formed. For example, two adjacent sub-mounting brackets 151 may be connected by welding, by structural adhesive, or by fasteners 141; alternatively, the multiple sub-mounting brackets 151 may be integrally formed. A single sub-mounting bracket 151 may correspond to one reinforced partition 40, or it may correspond to multiple reinforced partitions 40.

In the foregoing technical solution, by providing a mounting bracket 15 inside the box 10 and connecting the reinforced partition 40 of the battery cell assembly 20 to the box 10 through the mounting bracket 15, the stability and reliability of the connection between the reinforced partition 40 and the box 10 can be further enhanced, resulting in a higher overall rigidity and strength of the battery apparatus 100.

In some embodiments, referring to FIG. 16 and FIG. 17, a height dimension of the mounting bracket 15 in the third direction is less than a width dimension of the pouch battery cell 30 in the third direction, forming an arrangement space 16 to a side of the mounting bracket 15 in the third direction, and the first direction, the second direction, and the third direction intersect with each other.

For example, referring to FIG. 17, the height dimension of the mounting bracket 15 in the third direction is denoted as h, and the width dimension of the pouch battery cell 30 in the third direction is denoted as W2, where h is less than W2.

For example, when the third direction is the vertical direction, the mounting bracket 15 may be located at a lower portion of pouch battery cell 30, thereby forming an arrangement space 16 above the mounting bracket 15, which may be used for arranging the routing structure of the battery cell assembly 20.

In the foregoing technical solution, by ensuring that the height dimension of the mounting bracket 15 in the third direction is less than the width dimension of the pouch battery cell 30 in the third direction, an arrangement space 16 can be formed to the side of the mounting bracket 15 in the third direction, where this arrangement space 16 can be utilized for the routing and other structures of the battery cell assembly 20, simplifying the layout of the routing structure of the battery cell assembly 20. This allows for full utilization of the space inside the box 10 in the third direction, resulting in a compact internal structure of the battery apparatus 100 and contributing to increased energy density of the battery apparatus 100.

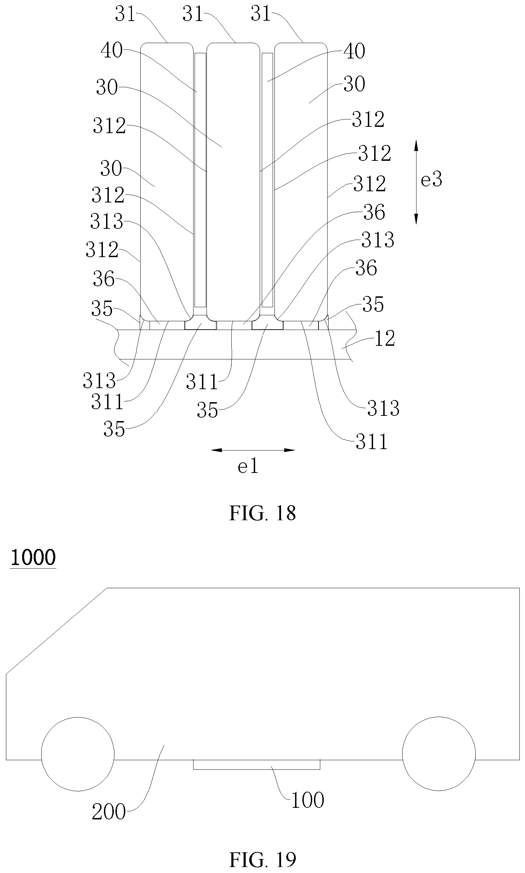

In some embodiments, referring to FIG. 18, at least some of the pouch battery cells 30 are arranged in the thickness direction of the pouch battery cells 30, adhesive damper strips are provided in the box 10, an outer surface of the housing 31 includes a housing bottom surface 311 and housing side surfaces 312, the housing bottom surface 311 is located on lower side of the housing 31, the housing side surfaces 312 are located on two sides of the pouch battery cell 30 in the thickness direction, a fillet section 313 is formed at the junction of the housing bottom surface 311 and the housing side surface 312, the box 10 includes a bottom plate 12, the housing bottom surface 311 is connected to the bottom plate 12 via an adhesive layer 36, the adhesive damper strip 35 is located on the outer peripheral side of the housing bottom surface 311, and at least a portion of the adhesive damper strip 35 is located between the fillet section 313 and the bottom plate 12.

For example, the thickness direction of the pouch battery cell 30 may refer to direction e1 in FIG. 18, and the vertical direction may refer to direction e3 in FIG. 18.

At least some of the pouch battery cells 30 being arranged in the thickness direction of the pouch battery cells 30 may include the following cases: Some pouch battery cells 30 are arranged in the thickness direction of the pouch battery cells 30, or all pouch battery cells 30 are arranged in the thickness direction of the pouch battery cells 30.

The housing bottom surface 311 of the pouch battery cell 30 faces the bottom plate 12. In the thickness direction of the pouch battery cell 30, the housing side surfaces 312 of two adjacent pouch battery cells 30 face each other.

Each pouch battery cell 30 has two housing side surfaces 312, and a fillet section 313 is formed at the junction of each housing side surface 312 and the housing bottom surface 311. The fillet section 313 may be a fillet.

The adhesive damper strip 35 may extend in the length direction of the pouch battery cell 30, with its length substantially matching the length of the pouch battery cell 30.

At least a portion of the adhesive damper strip 35 being located between the fillet section 313 and the bottom plate 12 may include the following cases: A portion of the adhesive damper strip 35 may be located between the fillet section 313 and the bottom plate 12, or the entire adhesive damper strip 35 may be located between the fillet section 313 and the bottom plate 12.

In the foregoing technical solution, by providing the adhesive damper strip 35 at a bevel part at the bottom of the pouch battery cell 30 and positioning the adhesive damper strip 35 between the fillet section 313 and the bottom plate 12, in fixing and connecting the housing bottom surface 311 of the pouch battery cell 30 to the bottom plate 12 of the box 10 using an adhesive layer 36, the provided adhesive damper strip 35 can prevent structural adhesive forming the adhesive layer 36 from overflowing into the gap between adjacent pouch battery cells 30, reducing the likelihood that a hard structure is formed in the gap between adjacent pouch battery cells 30 due to adhesive overflow. In this way, the problem of localized stress concentration between adjacent pouch battery cells 30 can be alleviated, reducing the risk of damage to the pouch battery cells 30.

In some embodiments, referring to FIG. 18, in the thickness direction of the pouch battery cells 30, two adjacent pouch battery cells 30 share one adhesive damper strip 35.

In sharing one adhesive damper strip 35 by two adjacent pouch battery cells 30, a portion of the shared adhesive damper strip 35 is located between the fillet section 313 of one pouch battery cell 30 and the bottom plate 12, a portion of the shared adhesive damper strip 35 is located between the fillet section 313 of the other pouch battery cell 30 and the bottom plate 12, and a portion of the shared adhesive damper strip 35 is located in the gap between the two adjacent pouch battery cells 30.

In the foregoing technical solution, by having two adjacent pouch battery cells 30 share a single adhesive damper strip 35, the two pouch battery cells 30 can use the shared adhesive damper strip 35 to prevent the structural adhesive forming the adhesive layer 36 from overflowing into the gap between adjacent pouch battery cells 30. This can reduce the number of adhesive damper strips 35 to be set, thereby reducing the number of adhesive damper strips 35 that need to be assembled, contributing to the reduction of the time required for assembling the battery apparatus 100.

In some embodiments, the adhesive damper strip 35 is adhesive damper foam, and the adhesive damper strip 35 is bonded to the bottom plate 12; or the adhesive damper strip 35 is a single-sided adhesive strip, and the adhesive damper strip 35 is bonded to the fillet section 313.

In the foregoing technical solution, the adhesive damper foam is used as the adhesive damper strip 35, and the adhesive damper foam has good compressibility. When the pouch battery cell 30 compresses the adhesive damper strip 35, the housing bottom surface 311 of the pouch battery cell 30 can be better separated from the gap between the two adjacent pouch battery cells 30 by the adhesive damper strip 35, thereby more effectively preventing the adhesive layer 36 on the bottom surface of the pouch battery cell 30 from overflowing into the gap between the two adjacent pouch battery cells 30. Furthermore, bonding the adhesive damper strip 35 to the bottom plate 12 facilitates the installation and fixation of the adhesive damper strip 35. Alternatively, by using a single-sided adhesive strip as the adhesive damper strip 35, the adhesive damper strip 35 can be bonded to the fillet section 313, making it easier to fix the adhesive damper strip 35 to the fillet section 313 of the pouch battery cell 30. This allows the adhesive damper strip 35 and the pouch battery cell 30 to form an integrated unit, facilitating the subsequent fixation of the pouch battery cell 30 to the bottom plate 12 of the box 10 via the adhesive layer 36.

According to a third aspect, referring to FIG. 19, this application provides an electric apparatus 1000 including the battery apparatus 100 according to the second aspect.

The electric apparatus 1000 could be a vehicle, with battery apparatus 100 installed at the bottom of the vehicle body 200.

In the foregoing technical solution, the electric apparatus 1000 includes the foregoing battery apparatus 100. The battery apparatus 100 has high energy density, which is conducive to enhancing the overall performance of the electric apparatus 1000.

The following describes the battery cell assembly 20 according to several embodiments of this application with reference to FIG. 1 to FIG. 6.

Referring to FIG. 1 to FIG. 4, in some embodiments of this application, a battery cell assembly 20 includes a plurality of pouch battery cells 30 sequentially connected in series.

The pouch battery cell 30 includes a housing 31, an electrode assembly 32, and electrode leads 33. The electrode assembly 32 is disposed within the housing 31, and the electrode leads 33 are electrically connected to the electrode assembly 32, and at least a portion of the electrode lead 33 is exposed outside the housing 31. The portion of the electrode lead 33 exposed outside the housing 31 is a lead-out part 331, and the lead-out part 331 is formed in a sheet-like shape. In width direction of the pouch battery cell 30, fillets 332 are formed at two ends of the lead-out part 331 in the width direction of the pouch battery cell 30. In the width direction of the pouch battery cell 30, the lead-out part 331 is located on a side of the width middle position, forming a clearance space 34 on a side of the lead-out part 331 close to the width middle position.

Two electrode leads 33 of the pouch battery cell 30 are located on two sides of the pouch battery cell 30 in length direction of the pouch battery cell 30. A positive electrode lead 33 of one of the two adjacent pouch battery cells 30 in the battery cell assembly 20 is directly connected to a negative electrode lead 33 of the other of the two adjacent pouch battery cells 30. The lead-out parts 331 of the electrode leads 33 of two adjacent pouch battery cells 30 are welded together. All pouch battery cells 30 in a battery cell assembly 20 are sequentially connected in series, and all pouch battery cells 30 in the battery cell assembly 20 are arranged the length direction of the pouch battery cells 30.

Referring to FIG. 4 to FIG. 6, in some other embodiments of this application, a battery cell assembly 20 includes a plurality of pouch battery cells 30 sequentially connected in series.

The pouch battery cell 30 includes a housing 31, an electrode assembly 32, and electrode leads 33. The electrode assembly 32 is disposed within the housing 31, and the electrode leads 33 are electrically connected to the electrode assembly 32, and at least a portion of the electrode lead 33 is exposed outside the housing 31. The portion of the electrode lead 33 exposed outside the housing 31 is a lead-out part 331, and the lead-out part 331 is formed in a sheet-like shape. In width direction of the pouch battery cell 30, fillets 332 are formed at two ends of the lead-out part 331 in the width direction of the pouch battery cell 30. In the width direction of the pouch battery cell 30, the lead-out part 331 is located on a side of the width middle position, forming a clearance space 34 on a side of the lead-out part 331 close to the width middle position.

Two electrode leads 33 of the pouch battery cell 30 are located on two sides of the pouch battery cell 30 in length direction of the pouch battery cell 30. A positive electrode lead 33 of one of the two adjacent pouch battery cells 30 in the battery cell assembly 20 is directly connected to a negative electrode lead 33 of the other of the two adjacent pouch battery cells 30. The lead-out parts 331 of the electrode leads 33 of two adjacent pouch battery cells 30 are welded together. All pouch battery cells 30 of the battery cell assembly 20 are sequentially connected in series.

All the pouch battery cells 30 of the battery cell assembly 20 are divided into multiple sub-battery cell assemblies 21, the multiple sub-battery cell assemblies 21 are arranged in the thickness direction of the pouch battery cells 30, and each of the sub-battery cell assemblies 21 includes one pouch battery cell 30. The lead-out parts 331 of two directly connected electrode leads 33 in two adjacent sub-battery cell assemblies 21 are connected and jointly form a connection part 22, and at least a portion of the connection part 22 is provided in a bent shape. The connection part 22 includes three straight sections 221 sequentially connected, with an arc section 222 connected between two adjacent straight sections 221. The straight section 221 located between two arc sections 222 may extend in the thickness direction of the pouch battery cell 30, while the remaining two straight sections 221 may extend in the length direction of the pouch battery cell 30. The lead-out part 331 of the electrode lead 33 includes a connection segment 333. The connection segments 333 of the two directly connected electrode leads 33 are overlapped and connected in the thickness direction of the lead-out part 331. The connection position of two directly connected electrode leads 33 is at the overlapped and connected position of the connection segments 333 of the two directly connected electrode leads 33, and the connection position of the two directly connected electrode leads 33 may be located on the straight section 221 extending in the length direction of the pouch battery cell 30.

In the description of this specification, the description referring to the terms "an embodiment", "some embodiments", "exemplary embodiments", "an example", "a specific example", or "some examples" means a specific feature, structure, material or characteristic described with reference to the embodiment or example is included in at least one embodiment or example of the this application. In this specification, illustrative expressions of these terms do not necessarily refer to the same embodiment or example. Moreover, the specific features, structures, materials, or characteristics described may be combined in a suitable manner in any one or more embodiments or examples.

Although the embodiments of this application have been shown and described, persons of ordinary skill in the art can understand that various changes, modifications, substitutions, and variants of these embodiments may be made without departing from the principle and essence of this application, and the scope of this application is limited by the claims and its equivalents.

## Claims

1. A battery cell assembly, comprising:
a plurality of pouch battery cells sequentially electrically connected, wherein each of the pouch battery cells comprises a housing, an electrode assembly, and electrode leads, the electrode assembly is disposed within the housing, the electrode leads are electrically connected to the electrode assembly, at least a portion of the electrode lead is exposed outside the housing, and the electrode leads of two adjacent pouch battery cells are directly connected.

2. The battery cell assembly according to claim 1, wherein the electrode leads of two adjacent pouch battery cells are welded together.

3. The battery cell assembly according to claim 1, wherein the electrode leads of two adjacent pouch battery cells are directly connected through electrically conductive adhesive.

4. The battery cell assembly according to any one of claims 1 to 3, wherein the portion of the electrode lead exposed outside the housing is a lead-out part, and the lead-out part is formed in a sheet-like shape.

5. The battery cell assembly according to claim 4, wherein in width direction of the pouch battery cell, fillets are formed at two ends of the lead-out part in the width direction of the pouch battery cell.

6. The battery cell assembly according to any one of claims 1 to 3, wherein the portion of the electrode lead exposed outside the housing is a lead-out part, and the lead-out part is a flexible structure.

7. The battery cell assembly according to any one of claims 1 to 3, wherein the portion of the electrode lead exposed outside the housing is a lead-out part, and a thickness of the lead-out part is 0.1 mm to 0.5 mm.

8. The battery cell assembly according to any one of claims 1 to 3, wherein the portion of the electrode lead exposed outside the housing is a lead-out part, and a width dimension of the lead-out part in the width direction of the pouch battery cell is 20 mm to 60 mm.

9. The battery cell assembly according to any one of claims 1 to 3, wherein the portion of the electrode lead exposed outside the housing is a lead-out part, and a length dimension of the lead-out part in the width direction of the pouch battery cell is 10 mm to 50 mm.

10. The battery cell assembly according to any one of claims 1 to 3, wherein the portion of the electrode lead exposed outside the housing is a lead-out part, and the lead-out part is made of aluminum foil or copper foil.

11. The battery cell assembly according to any one of claims 1 to 3, wherein the portion of the electrode lead exposed outside the housing is a lead-out part, the lead-out part comprises a connection segment, the connection segments of two directly connected electrode leads are overlapped and connected, and a ratio of a length dimension of the connection segment in length direction of the pouch battery cell to a length dimension of the lead-out part in the length direction of the pouch battery cell is 1/4 to 1/2.

12. The battery cell assembly according to any one of claims 1 to 11, wherein the two electrode leads of the pouch battery cell are located on two opposite sides in the length direction of the pouch battery cell.

13. The battery cell assembly according to claim 12, wherein the portion of the electrode lead exposed outside the housing is the lead-out part, a middle position of the pouch battery cell in the width direction is a width middle position, and in the width direction of the pouch battery cell, the lead-out part is located on a side of the width middle position, forming a clearance space on a side of the lead-out part close to the width middle position.

14. The battery cell assembly according to any one of claims 1 to 13, wherein the plurality of pouch battery cells of the battery cell assembly are sequentially connected in series.

15. The battery cell assembly according to any one of claims 1 to 14, further comprising a thermal management component, wherein the thermal management component is disposed on at least one side of the pouch battery cells in the thickness direction, and the thermal management component is thermally connected to the pouch battery cells for heat exchange with the pouch battery cells.

16. The battery cell assembly according to any one of claims 1 to 15, wherein all the pouch battery cells of the battery cell assembly are arranged in the length direction of the pouch battery cells.

17. The battery cell assembly according to any one of claims 1 to 15, wherein all the pouch battery cells of the battery cell assembly are divided into multiple sub-battery cell assemblies, the multiple sub-battery cell assemblies are arranged in the thickness direction of the pouch battery cells, and each of the sub-battery cell assemblies comprises one pouch battery cell or multiple pouch battery cells arranged in the length direction of the pouch battery cells.

18. The battery cell assembly according to claim 17, wherein the portion of the electrode lead exposed outside the housing is the lead-out part, the lead-out parts of the two directly connected electrode leads in the two adjacent sub-battery cell assemblies are connected and jointly form a connection part, and at least a portion of the connection part is curved.

19. The battery cell assembly according to claim 18, wherein in a direction of connection between the two directly connected electrode leads, the connection part comprises multiple straight sections sequentially connected, the two adjacent straight sections are arranged at an angle, and the two adjacent straight sections are connected by an arc section, the arc section extending along an arc, and the straight section extending along a straight line.

20. The battery cell assembly according to claim 19, wherein a position of connection between the two directly connected electrode leads is located on the straight section.

21. The battery cell assembly according to any one of claims 17 to 20, further comprising a reinforced partition, wherein the reinforced partition is sandwiched between two adjacent pouch battery cells, and the reinforced partition has a higher hardness than the housing.

22. The battery cell assembly according to claim 21, wherein a thickness of the reinforced partition is 0.8 mm to 2.0 mm.

23. The battery cell assembly according to claim 21, wherein the reinforced partition is an aluminum plate, an aluminum alloy plate, a copper plate, or a steel plate.

24. The battery cell assembly according to claim 21, wherein the reinforced partition is a solid structure.

25. The battery cell assembly according to claim 21, wherein a cavity is formed inside the reinforced partition.

26. The battery cell assembly according to claim 25, wherein the cavity comprises a heat exchange channel for the flow of heat exchange medium.

27. The battery cell assembly according to any one of claims 1 to 26, wherein the pouch battery cell is any one of a lithium iron phosphate battery cell, a ternary lithium battery cell, and a solid-state battery cell.

28. The battery cell assembly according to claim 27, wherein when the pouch battery cell is a lithium iron phosphate battery cell, a weight ratio of a positive electrode active material, a positive electrode binder, and a positive electrode conductive agent in a positive electrode material of the pouch battery cell is 96:(1 to 3):(1 to 3); and when the pouch battery cell is a ternary lithium battery cell, a weight ratio of a positive electrode active material, a positive electrode binder, and a positive electrode conductive agent in a positive electrode material of the pouch battery cell is 96:(2 to 3):(1 to 2).

29. A battery apparatus, comprising:
a box; and
a battery cell assembly disposed inside the box, wherein the battery cell assembly is the battery cell assembly according to any one of claims 1 to 20.

30. The battery apparatus according to claim 29, wherein a plurality of battery cell assemblies are provided.

31. The battery apparatus according to claim 30, wherein at least some of the battery cell assemblies are arranged in a first direction, and thickness direction of the pouch battery cells is all aligned with the first direction.

32. The battery apparatus according to claim 30, wherein the plurality of battery cell assemblies are connected in series and/or in parallel.

33. The battery apparatus according to any one of claims 29 to 32, wherein the thickness direction of the pouch battery cells is all aligned with the first direction, length direction of the pouch battery cells is all aligned with a second direction, width direction of the pouch battery cells is all aligned with a third direction, the first direction, the second direction, and the third direction intersect with each other, and a bottom plate and a top cover of the box are respectively located on two opposite sides of the battery cell assembly in the second direction.

34. The battery apparatus according to any one of claims 29 to 33, wherein inside the box there is an accommodating cavity for accommodating the battery cell assembly, a constraint piece extending in the first direction is provided inside the box, and two ends of the constraint piece in length direction are respectively connected to two side walls of the accommodating cavity in the first direction.

35. The battery apparatus according to claim 34, wherein the two ends of the constraint piece are connected and fixed to the box by fasteners.

36. The battery apparatus according to claim 34, wherein the constraint piece comprises a constraint belt and an insulating layer, the constraint belt being a metal piece, and the insulating layer covering an outer surface of the constraint belt.

37. The battery apparatus according to any one of claims 29 to 36, wherein in the first direction, a reinforced partition is sandwiched between at least some of two adjacent pouch battery cells, the reinforced partition is connected to the housing, and the reinforced partition has a higher hardness than the housing.

38. The battery apparatus according to claim 37, wherein a thickness of the reinforced partition is less than that of the pouch battery cell.

39. The battery apparatus according to claim 37, wherein the reinforced partition is a metal plate.

40. The battery apparatus according to claim 37, wherein the reinforced partition is a thermally conductive piece and is thermally connected to the housing.

41. The battery apparatus according to claim 37, wherein the reinforced partition is a solid structure.

42. The battery apparatus according to claim 37, wherein a cavity is formed inside the reinforced partition.

43. The battery apparatus according to claim 42, wherein the cavity comprises a heat exchange channel for the flow of heat exchange medium.

44. The battery apparatus according to any one of claims 37 to 43, wherein a buffer layer is sandwiched between at least some of two adjacent pouch battery cells, and the buffer layer has a lower hardness than the housing.

45. The battery apparatus according to claim 44, wherein the buffer layer is a foam layer or a silicone layer.

46. The battery apparatus according to claim 44, wherein the buffer layer and the reinforced partition are alternately arranged in the first direction.

47. The battery apparatus according to any one of claims 37 to 43, wherein the electrode leads are located on two opposite sides of the pouch battery cell in the second direction, the second direction intersects with the first direction, and in the second direction and in a direction close to a side wall of the box, an end part of the reinforced partition protrudes out of the housing of the pouch battery cell to form a fixed end, and the fixed end is connected to the box.

48. The battery apparatus according to claim 47, wherein the fixed end and the electrode lead located on a same side in the second direction are arranged in the third direction, and the first direction, the second direction, and the third direction intersect with each other.

49. The battery apparatus according to claim 47, wherein a mounting bracket is provided inside the box, the mounting bracket is located on at least one side of the battery cell assembly in the second direction and connected to the box, and the fixed end is connected to the mounting bracket.

50. The battery apparatus according to claim 49, wherein a height dimension of the mounting bracket in the third direction is less than a width dimension of the pouch battery cell in the third direction, forming an arrangement space to a side of the mounting bracket in the third direction, and the first direction, the second direction, and the third direction intersect with each other.

51. The battery apparatus according to any one of claims 29 to 50, wherein at least some of the pouch battery cells are arranged in the thickness direction of the pouch battery cells, an adhesive damper strip is provided inside the box, an outer surface of the housing comprises a housing bottom surface and housing side surfaces, the housing bottom surface is located on lower side of the housing, the housing side surfaces are located on two sides of the pouch battery cell in the thickness direction, a fillet section is formed at the junction of the housing bottom surface and the housing side surface, the box comprises a bottom plate, the housing bottom surface is connected to the bottom plate via an adhesive layer, the adhesive damper strip is located on the outer peripheral side of the housing bottom surface, and at least a portion of the adhesive damper strip is located between the fillet section and the bottom plate.

52. The battery apparatus according to claim 51, wherein in the thickness direction of the pouch battery cells, two adjacent pouch battery cells share one adhesive damper strip.

53. The battery apparatus according to claim 51, wherein the adhesive damper strip is adhesive damper foam, and the adhesive damper strip is bonded to the bottom plate; or the adhesive damper strip is a single-sided adhesive strip, and the adhesive damper strip is bonded to the fillet section.

54. An electric apparatus, comprising the battery apparatus according to any one of claims 29 to 53.
